# EUROPEAN PATENT APPLICATION

(11) **EP 4 763 918 A1**
(43) Date of publication of application: **24.06.2026**
(21) Application number: 24854169.0
(22) Date of filing: 08.08.2024
(51) Int. Cl.: C08L 83/04, C08K 3/22, C08K 3/28

(54) **THERMALLY CONDUCTIVE COMPOSITION, THERMALLY CONDUCTIVE MEMBER, AND HEAT-DISSIPATING STRUCTURE**

(30) Priority: 17.08.2023 JP 2023133023
(71) Applicant: Dow Toray Co., Ltd., Tokyo 140-8617 (JP)
(72) Inventor: OTA Kenji, Ichihara-shi Chiba 299-0108 (JP)
(74) Representative: Novagraaf Group
(86) International application number: PCT/JP2024/028464
(87) International publication number: WO 2025/037579

(57) **Abstract**

PROBLEM

To provide a thermally conductive composition that has extremely high thermal conductivity, excellent extrusion workability and filling properties into small-volume packages, as well as a thermally conductive member made thereof, and a heat dissipation structure using the same.

SOLUTION

A thermally conductive composition, comprising: (A) zinc oxide powder/aluminum oxide powder having a particle size of 0.1 to 1.0 µm; (B) aluminum nitride powder/aluminum oxide powder having an irregular shape or the like having a particle size of 2.0 to 29 µm; (C) aluminum nitride powder having an irregular shape or the like having a particle size of 30 µm or more; (D) spherical aluminum nitride powder having a particle size of more than 50 µm; (E) a specific Si-based surface treatment agent; and (F) a matrix polymer, wherein the amount of components (A) to (D) are in the range of 60 to 90 vol.%, based on the total solid content of the composition; the amount of component (C) is in a range of 1.0 to 20.0 vol.%; and the amount of component (D) is in a range of 0.0 to 30.0 vol.%; as well as use thereof.

## Description

### TECHNICAL FIELD

The present invention relates to a thermally conductive composition that has extremely high thermal conductivity, and when cured, has sufficient flexibility and stress relaxation properties for practical use. The thermally conductive composition also has good extrudability and dischargeability from cartridges and the like, allowing easy filling into small quantity packages and providing excellent work efficiency during application. The present invention also relates to a thermally conductive member made of the composition, and a heat dissipation structure using the composition.

### BACKGROUND ART

In recent years, with the increasing density and integration of printed circuit board and hybrid ICs equipped with electronic components such as transistors, ICs, and memory elements, and the increasing capacity of secondary batteries (cell type), thermally conductive silicone compositions containing an organopolysiloxane and a thermally conductive filler such as aluminum oxide powder, aluminum hydroxide powder, or zinc oxide powder have come into widespread use to efficiently dissipate the heat generated by electronic components, batteries, and other electronic and electrical devices. Thermally conductive silicone compositions are expected to have excellent heat resistance, and even when blended with high concentrations and high-volume percentages of thermally conductive fillers, the cured product is rubber-like, and thus has a certain degree of flexibility and stress relaxation properties, maintains conformability and adhesion to heat sources in the heat dissipating structures, and maintains heat dissipation performance. In recent years, in order to accommodate high heat dissipation, thermally conductive silicone compositions containing large amounts of thermally conductive filler have been proposed. However, thermally conductive fillers such as aluminum oxide, aluminum hydroxide powder, and the like have limitations in thermal conductivity, and there is a problem in that even if a large amount is added, the thermal conductivity of the composition and a cured product thereof cannot be further improved. On the other hand, boron nitride powder is known as a thermally conductive filler having excellent thermal conductivity (for example, Patent Document 1, or the like). However, boron nitride powder has a flat shape, and the cured product may have anisotropy in thermal conductivity.

On the other hand, similarly, aluminum nitride powder is known as a thermally conductive filler that has excellent thermal conductivity. Aluminum nitride powder is known to be spherical or irregular in shape, and unlike boron nitride powder, is less likely to produce anisotropy in the thermal conductivity of the cured product. Therefore, thermally conductive silicone compositions have been proposed that combine various aluminum nitride powders and other thermally conductive fillers (Patent Documents 2 to 19).

However, in thermally conductive silicone compositions that combine these thermally conductive fillers, when a high amount of thermally conductive filler such as aluminum nitride powder is blended, the rubber properties inherent in the cured polymer silicone product generally tend to degrade, and if the amount of the thermally conductive filler is too high, the resulting cured product will be too hard, causing gaps to form between the product and the heat dissipation target, and impairing conformability and stress relaxation properties, and in some cases, achieving sufficient heat dissipation properties might not be possible. In other words, in curable thermally conductive silicone compositions, controlling the hardness of the thermally conductive cured material is an extremely important issue in achieving heat dissipation. In addition, when a large amount of a thermally conductive filler such as aluminum nitride powder is added, the fluidity of the composition itself tends to be impaired, and when attempting to fill a cartridge, dispenser, or the like with the aim of applying a small amount or a pinpoint, a sufficient extrusion amount cannot be ensured, thus inhibiting filling, particularly with the aim of packaging a small amount, and workability and coatability after adding the filler may decrease, resulting in a decrease in work efficiency. In addition, uniformly dispersing the thermally conductive filler in the silicone composition might be difficult, which may adversely affect the expected thermal conductivity, curing properties, and workability during commercial production. Therefore, highly thermally conductive silicone compositions containing a high amount of a thermally conductive filler such as aluminum nitride powder, and in particular, those having a thermal conductivity of 9.0 W/mK or greater, have room for improvement in terms of performance and workability for industrial widespread use.

Note that none of the above documents describes or suggests further adjusting the hardness of the cured product of a hydrosilylation reaction-curable silicone composition by blending a fatty acid or the like, or using the composition in combination with a heat resistance-imparting agent such as a phthalocyanine compound. Furthermore, Patent Document 20 proposes use of a methylpolysiloxane containing a trifunctional hydrolyzable group at one end in a thermally conductive silicone rubber composition for the purpose of adjusting the viscosity and plasticity of the composition, but only those methylpolysiloxanes with a degree of polymerization of around 30 are used, and there is no mention or suggestion of limiting the degree of polymerization to a specific range, or in particular, of the effects on extrusion workability or the heat aging properties or thermal conductivity of the cured product.

### RELATED ART DOCUMENTS

### PATENT DOCUMENTS

Patent Document 1: Japanese Unexamined Patent Application Publication H07-330927
Patent Document 2: International Publication No. 2018/016566 (Patent Registration No. 6246986)
Patent Document 3: Japanese Unexamined Patent Application Publication 2001-002830 (Japanese Patent No. 3746915)
Patent Document 4: Japanese Unexamined Patent Application Publication 2002-299533 (Japanese Patent No. 4574885)
Patent Document 5: Japanese Unexamined Patent Application Publication 2001-230353 (Japanese Patent No. 4357064)
Patent Document 6: Japanese Unexamined Patent Application Publication 2000-063872 (Japanese Patent No. 2930298)
Patent Document 7: International Publication WO 2016/190189
Patent Document 8: International Publication WO 2020/262449
Patent Document 9: International Publication WO 2018/074247
Patent Document 10: International Publication WO 2017/203924
Patent Document 11: International Publication WO 2020/137086
Patent Document 12: Japanese Unexamined Patent Application Publication 2020-169231 (Japanese Patent No. 7027368)
Patent Document 13: International Publication WO 2021/131212
Patent Document 14: International Publication WO 2020/137970
Patent Document 15: Japanese Unexamined Patent Application Publication 2020-090584
Patent Document 16: International Publication WO 2021/225059
Patent Document 17: International Publication WO 2021/099507
Patent Document 18: International Publication WO 2021/256391
Patent Document 19: International Publication WO 2021/261958
Patent Document 20: Japanese Unexamined Patent Application Publication 2000-256558 (Japanese Patent No. 3543663)

### SUMMARY OF THE INVENTION

### PROBLEM TO BE SOLVED BY THE INVENTION

Furthermore, the present inventors have discovered a new problem with hydrosilylation reaction curable thermally conductive silicone compositions. As described above, when a thermally conductive silicone composition containing a large amount of thermally conductive filler is cured, the cured reaction product tends to harden, and there is often a trade-off between high thermal conductivity and flexibility of the cured reaction product. However, even when thermally conductive silicone compositions are designed by adjusting the hardness and thermal conductivity of the cured material, in the case of high heat-dissipating compositions that contain a very high vol.% of thermally conductive fillers (for example, 60 vol.% or more of the total composition (solid content)) as described above, the cured material may harden rapidly after heating and aging, and will lose flexibility and rubber elasticity. The cured material may harden rapidly after heat aging and lose flexibility and rubber elasticity, resulting in loss of stress relaxation, as well as conformability and adhesion in the heat-dissipating structure. As a result, the originally planned heat dissipation characteristics may not be fully realized.

In light of the foregoing, an object of the present invention is to provide a thermally conductive composition which has high thermal conductivity due to including a thermally conductive filler such as aluminum nitride powder or the like at a very high volume percentage, and a thermally conductive member made from the cured product, having sufficient flexibility and stress relaxation properties for practical use, which is easy to extrude from a cartridge, dispenser, or the like, and being particularly excellent in terms of fillability, workability, and applicability for small quantity packages; as well as a thermally conductive member made from the composition, and a heat dissipation structure using the composition.

### MEANS FOR SOLVING THE PROBLEM

As a result of extensive research, the present inventors discovered that the aforementioned problems can be resolved by a thermally conductive composition, comprising:
(A) at least one thermally conductive filler selected from zinc oxide powder and aluminum oxide powder, having an average particle size in a range of 0.1 to 1.0 µm;
(B) at least one thermally conductive filler selected from aluminum nitride powder and aluminum oxide powder, which has an average particle size in a range of 2.0 to 29 µm and is selected from amorphous, rounded, and polyhedral shapes;
(C) aluminum nitride powder having an average particle size of 30 µm or more and having a shape selected from irregular, rounded, and polyhedral shapes;
(D) aluminum nitride powder having an average particle size of more than 50 µm and a spherical shape;
(E) one or more components selected from the following Component (E1) to Component (E3):
   (E1) an organopolysiloxane expressed by general formula (1): 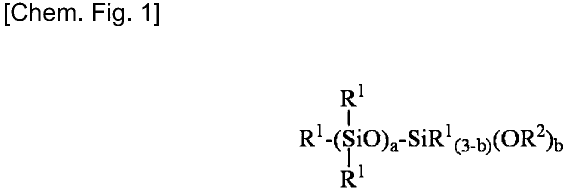 (In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is an integer from 5 to 250, and b is an integer from 1 to 3) and having a viscosity at 25°C of 10 to less than 10,000 mPa·s;
   (E2) a siloxane compound having an alkenyl group and a hydrolyzable silyl group at the molecular chain terminal, expressed by general formula (2):

      R^{alk}R³₂SiO(R³₂SiO)_{c}R³₂Si-R⁴-SiR³_{(3-d)}(OR⁵)_{d}
      (where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3)
      having a viscosity at 25°C in a range of 10 to 10,000 mPa·s; and
   (E3) one or more type of alkoxysilane having an alkyl group with 6 or more carbon atoms in a molecule, or a hydrolysis condensate thereof; and
(F) one or more type of matrix polymer having a viscosity at 25°C in a range of 10 to 100,000 mPa·s;
   wherein:
   the amount of components (A) to (D) is in a range of 60 to 90 vol.% based on the total solid content of the composition,
   the amount of component (C) is in a range of 1.0 to 20.0 vol.% based on the total solid content of the composition, and
   the amount of component (D) is in a range of 0.0 to 30.0 vol.% based on the total solid content of the composition. Thus, the present invention was achieved.
In other words, the composition is a thermally conductive composition that contains a large amount (specifically, in a range of 60 to 90 vol.%, based on the total solid content of the composition) of a thermally conductive filler such as aluminum nitride powder in order to impart high thermal conductivity. However, by blending thermally conductive fillers of specific shapes and particle sizes in a specific quantitative range in combination and by containing a specific component (E) that functions as a surface treatment agent, it is possible to achieve both extremely high thermal conductivity and coatability and workability of the composition itself, such as during extrusion, which have traditionally been in a trade-off relationship. Furthermore, if the composition is curable and reactive, flexibility (in other words, rubber properties) can also be achieved. Note that the thermally conductive filler containing the above components (A) to (D) does not substantially contain aluminum nitride powder having an average particle size of less than 2.0 µm (more specifically, the amount of aluminum nitride powder having an average particle size of less than 2.0 µm in the entire thermally conductive filler is less than 0.5 mass%, more preferably less than 0.1 mass%, and particularly preferably below the detection limit (=0.0 mass%)).

Note that the composition may also contain a certain amount of at least one fatty acid compound selected from fatty acids, fatty acid esters, and fatty acid metal salts, as well as a heat resistance imparting agent. Furthermore, when preparing the composition, the matrix polymer (preferably an organopolysiloxane) that is the main component of the composition, the thermally conductive filler, and a component that functions as a specific surface treatment agent (the aforementioned Component (E)) may be mixed together and heated (base heat), or the matrix polymer (preferably an organopolysiloxane), the thermally conductive filler, and Component (E) may be mixed and added to the mixture after base heating, together with the other components.

### EFFECT OF THE INVENTION

The present invention provides a thermally conductive composition or a curing reaction product thereof, which has an extremely high thermal conductivity of 9.0 W/mK or more, while also having practically sufficient coatability, flexibility, and stress relaxation properties, and a thermally conductive member made from the same, and which can be formed. The thermally conductive composition is also easy to extrude from a cartridge, dispenser, or the like, and can be relatively easily filled into small-volume packages such as syringes, and therefore has excellent workability and coatability. Furthermore, the present invention can provide the thermally conductive composition or a thermally conductive member obtained by curing the composition, and a heat dissipation structure using the same (particularly, a heat dissipation structure for an electric or electronic device, including a heat dissipation structure for an electric or electronic component and a heat dissipation structure for a secondary battery).

Note that by further adding the aforementioned fatty acid-based compound and heat resistance imparting agent to the cured product of the thermally conductive composition of the present invention as needed, extremely high thermal conductivity can be achieved while exhibiting suppressed hardness change even when used at high temperature. Therefore, the rubber physical properties at the time of curing are not impaired, and excellent flexibility and stress relaxation properties can be maintained even after heat aging. When applied to heat dissipation targets having various shapes, the composition is resistant to peeling from the heat-generating component or the occurrence of voids (including the occurrence of voids due to partial/temporary peeling from the member, even when used at a high temperature for a long period of time; the same applies hereinafter) due to vibration or the like, and continues to maintain excellent adhesion and conformability, which provides an advantage that the heat dissipation efficiency at the initial stage of application is maintained without being impaired. Therefore, compared to conventional products, the present invention has advantages such as operation efficiency during extrusion, superior durability and heat dissipation performance of heat-dissipating members, applicability to heat-dissipating objects with various shapes, resistance to peeling even when used for assembly and fabrication under high temperature, and ability to be used in heat dissipating processes at high temperature for a long period of time.

### DESCRIPTION OF THE PREFERRED EMBODIMENTS

### [Thermally conductive composition]

The composition of the present invention is a thermally conductive composition containing a matrix polymer, which may preferably be an organopolysiloxane or the like, and uses a combination of specific thermally conductive fillers, contains specific components that function as surface treatment agents, and by specifying the quantitative range of these thermally conductive fillers, the composition can have extremely high thermal conductivity and rubber physical properties in the cured product, is easy to extrude from a cartridge or dispenser, and has excellent filling properties even in small-volume packages, and will also have excellent workability and work efficiency during application. Furthermore, the composition of the present invention may be used in an uncured state as a grease or gap filler material, or may be a composition that has curing reactivity via a hydrosilylation reaction and has a specific SiH/alkenyl group reaction ratio. If the composition has curing reactivity, the composition may also contain at least one compound selected from fatty acids, fatty acid esters, and fatty acid metal salts (hereinafter, sometimes referred to as "fatty acid compounds") and a heat resistance imparting agent. The inclusion of these components has the advantage that the rubber properties of the cured product are not impaired even after heat aging. Furthermore, in order to further improve the extrusion workability of the composition and the heat aging properties and thermal conductivity of the cured product, a component having a specific degree of siloxane polymerization may be selectively used as component (E1) described below.

More specifically, the composition according to the present invention is a thermally conductive composition, comprising:
(A) at least one thermally conductive filler selected from zinc oxide powder and aluminum oxide powder, having an average particle size in a range of 0.1 to 1.0 µm;
(B) at least one thermally conductive filler selected from aluminum nitride powder and aluminum oxide powder, which has an average particle size in a range of 2.0 to 29 µm and is selected from amorphous, rounded, and polyhedral shapes;
(C) aluminum nitride powder having an average particle size of 30 µm or more and having a shape selected from irregular, rounded, and polyhedral shapes;
(D) aluminum nitride powder having an average particle size of more than 50 µm and a spherical shape;
(E) one or more components selected from the following Component (E1) to Component (E3):
   (E1) an organopolysiloxane expressed by general formula (1): 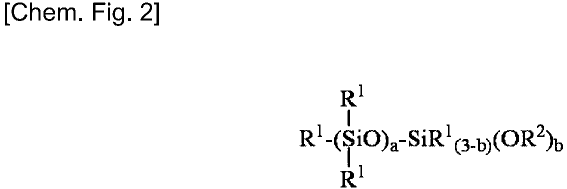 (In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is an integer from 5 to 250, and b is an integer from 1 to 3) and having a viscosity at 25°C of 10 to less than 10,000 mPa·s;
   (E2) a siloxane compound having an alkenyl group and a hydrolyzable silyl group at the molecular chain terminal, expressed by general formula (2):

      R^{alk}R³₂SiO(R³₂SiO)_{c}R³₂Si-R⁴-SiR³_{(3-d)}(OR⁵)_{d}

      (where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3)
      having a viscosity at 25°C in a range of 10 to 10,000 mPa·s; and
   (E3) one or more type of alkoxysilane having an alkyl group with 6 or more carbon atoms in a molecule, or a hydrolysis condensate thereof; and
(F) one or more type of matrix polymer having a viscosity at 25°C in a range of 10 to 1,000,000 mPa·s; wherein
   the amount of components (A) to (D) is in a range of 60 to 90 vol.% based on the total solid content of the composition,
   the amount of component (C) is in a range of 1.0 to 20.0 vol.% based on the total solid content of the composition, and
   the amount of component (D) is in a range of 0.0 to 30.0 vol.% based on the total solid content of the composition.
Note that the composition may be used in an uncured state or may be reactively cured. Specifically, Component (F) preferably contains (F0) one or more organopolysiloxanes having a viscosity at 25°C in a range of 10 to 1,000,000 mPa·s, and may be one or more organopolysiloxane selected from (F1) organopolysiloxanes that do not have a curing reactive group with a carbon-carbon double bond in the molecule, and (F2) organopolysiloxanes that have a curing reactive group with a carbon-carbon double bond in the molecule. A curing reactive composition using Component (F2) may further contain (G) an organohydrogenpolysiloxane and (H) a catalytic amount of a hydrosilylation reaction catalyst, and may optionally contain (K) a heat resistance imparting agent and (J) a fatty acid compound. Additionally, the composition may contain hydrosilylation inhibitors, adhesion promoters, organic solvents, and other additives. The compositions of the present invention may be in the form of one-component compositions or a multi-component composition such as a two-component composition. Hereinafter, each component, added amount thereof, and the like will be described.

Hereinafter, the average particle size of each Component (including spherical to irregular shapes) of the thermally conductive filler, is the cumulative average particle size D₅₀ (median size) in the volume-based particle size distribution measured by the laser diffraction scattering method, and can be measured using a laser diffraction particle size distribution measuring device that is widely used in the field. Furthermore, based on the same principle, the amount (volume%) of coarse particles with a certain particle size or less can be determined using a laser diffraction particle size distribution analyzer.

### [Thermally conductive fillers (A) to (D)]

Components (A) to (D) are thermally conductive fillers for imparting thermal conductivity to the present composition and a thermally conductive member obtained by curing the present composition. Note that in the present invention, these thermally conductive fillers (including individual components) are preferably substantially free of aluminum nitride powder having an average particle size of less than 2.0 µm (hereinafter, sometimes referred to as "coarse particles") in order to achieve the technical effects of the present invention. Here, "substantially free" means that the amount of aluminum nitride powder having an average particle size of less than 2.0 µm relative to the total thermally conductive filler is less than 0.5 vol.%, more preferably less than 0.1 vol.%, and particularly preferably below the detection limit (= 0.0 vol.%). On the other hand, if the amount of aluminum nitride powder with an average particle size of 2.0 µm in any one of Components (A) to (D) or other thermally conductive filler is 0.5 mass% or more, the technical effects of the present invention may not be achieved.

Component (A) is at least one thermally conductive filler selected from zinc oxide powder and aluminum oxide powder, having an average particle size in a range of 0.1 to 1.0 µm. The shape thereof is not particularly limited, and includes a spherical shape, a needle shape, a disk shape, a rod shape, and an indefinite shape, and is preferably a spherical shape or an indefinite shape. Note that the term spherical shape includes polyhedral spherical shapes. The average particle size of Component (A) is preferably in a range of 0.10 to 0.75 µm, and may be in a range of 0.10 to 0.60 µm.

Component (A) has the smallest average particle size among the thermally conductive fillers of the present invention, and is a thermally conductive filler that is added for the purpose of achieving close packing. By using this component in combination with aluminum nitride powder or the like described below within a certain quantitative range, the thermal conductivity of the cured product can be improved without impairing the physical properties of the rubber or the workability during extrusion.

Component (B) is an aluminum nitride powder or aluminum oxide powder selected from amorphous, rounded, and polyhedral shape with an average particle size in a range of 2.0 to 29 µm. The shape of Component (B) is preferably irregular, and does not include spherical or polyhedral spherical shapes. In other words, spherical and polyhedral spherical components are explicitly excluded from Component (B). Furthermore, in the present invention, "irregular shape" means that the particles do not have a fixed shape, but have a plurality of corners and protrusions, and are clearly distinguishable from symmetrical spheres or polyhedral spheres. Furthermore, "rounded" refers to a smooth particle with few corners and a rounded shape, but since there still are some corners and protrusions, the shape can be clearly distinguished from a symmetrical sphere or polyhedral sphere as mentioned above. Furthermore, a polyhedron does not have rounded spherical surfaces and is therefore clearly distinguishable from a symmetrical sphere or a polyhedron. A spherical particle is not preferred because there are no corners, making it difficult to make contact, and leading to poor thermal conductivity. In the present invention, the most suitable Component (B) is aluminum nitride powder or aluminum oxide powder that is amorphous and has an average particle size in a range of 2.0 to 29 µm. The average particle size of Component (B) is preferably in a range of 2.1 to 25 µm, and may be in a range of 2.4 to 15.0 µm. If the type of Component (B) is different or the particle size is less than the lower limit, workability may be impaired, particularly during extrusion, or a paste-like composition might not be obtained at all, inhibiting extrusion from a cartridge or dispenser.

Component (C) is an aluminum nitride powder having an average particle size of 30 µm or more, with shape selected from amorphous, rounded, and polyhedral shapes. When used in combination with components (A) and (B) in a certain quantitative range, in particular, this component achieves the technical effects of the present invention and provides extremely high thermal conductivity without causing any problems with anisotropy. Note that the Component (B) is defined by the upper limit of the average particle size.

The shape of Component (C) is preferably irregular, and does not include spherical or polyhedral spherical shapes. Note that the terms "irregular shape", "rounded shape", and "polyhedral shape" are the same as those described for Component (B), and Component (C) having these shapes can be clearly distinguished from symmetrical spherical or polyhedral spherical particles in terms of shape. For the present invention, the most suitable Component (C) is aluminum nitride powder that is irregular in shape and has an average particle size in a range of 30 µm or more. Furthermore, in the present invention, Component (D) described below may be and preferably is used in combination with large diameter, spherical aluminum nitride powder.

The average particle size of Component (C) is 30 µm or more, and may be in a range of 30 to 300 µm, or 30 to 180 µm. Furthermore, as described above, Component (C) preferably does not include aluminum nitride powder having an average particle size of less than 2.0 µm, and the amount of Component (C) is 1 vol.% or less, and most preferably 0 vol.% or less, calculated to one significant digit. If the amount of small particle diameter aluminum nitride powder is high, the effect of the small particle diameter aluminum nitride powder may impair workability during extrusion even if a specific amount of Component (C) is used, or a paste-like composition may not be obtained, impeding extrusion.

Component (D) is a spherical aluminum nitride powder having an average particle size of more than 50 µm, and although it is an optional component in the present invention, this component further improves the technical effects of the present invention and provides extremely high thermal conductivity, particularly without causing problems with anisotropy, when used in combination with Components (A), (B), and (C) in a certain quantitative range. Note that Component (B) is classified by the upper limit of the average particle size, and Component (C) is classified by shape.

The average particle size of Component (D) is greater than 50 µm, and may be in a range of 51 to 300 µm, or 51 to 180 µm. Furthermore, Component (D) preferably does not include aluminum nitride powder having an average particle size of less than 2.0 µm, and the amount of Component (D) is 1 vol.% or less, and most preferably 0 vol.% or less, calculated to one significant digit. The reason for this is the same as described for Component (C).

### [Other thermally conductive fillers]

The composition of the present invention may contain thermally conductive fillers other than the above components (A) to (D). For example, the powder and/or fiber may be at least one selected from the group consisting of pure metals, alloys, metal oxides, metal hydroxides, metal nitrides, metal carbides, metal silicides, carbon, soft magnetic alloys, and ferrites, which do not fall under the category of components (A) to (D), and metal-based powders, metal oxide-based powders, metal nitride-based powders, or carbon powders are preferred. The shape thereof is not particularly limited, and examples include spherical shapes, needle shapes, disk shapes, rod shapes, and indefinite shapes, and is preferably a spherical shape or an indefinite shape. As long as the above conditions regarding components (A) to (D) and the quantitative ranges are satisfied, the average particle size of the other thermally conductive fillers is not particularly limited, but is preferably in a range of 0.01 to 500 µm, and more preferably in a range of 0.01 to 300 µm.

Preferable other thermally conductive fillers include silver powder, aluminum powder, aluminum oxide powder, zinc oxide powder, magnesium oxide powder, aluminum nitride powder and graphite. When electrical insulation is required for the present composition, a metal oxide powder or a metal nitride powder is preferable, and in particular, aluminum oxide powder, zinc oxide powder, magnesium oxide powder, or aluminum nitride powder is preferable. However, Components (A) to (D) are excluded.

### [Amounts of Components (A) to (D) and Other Thermally Conductive Fillers]

The composition of the present invention has an extremely high thermal conductivity of 9.0 W/mK or more, and can form a cured product having sufficient flexibility and stress relaxation properties for practical use, as well as a thermally conductive member made from the cured product. In addition, when filled into a cartridge or the like, the composition is in a paste form, which allows for excellent work efficiency during extrusion. To achieve this property, the blending amounts of the aforementioned components must be within the specific ranges.

Specifically, in the present invention, the amount of the thermally conductive filler including Components (A) to (D) must be in a range of 60 to 90 vol.%, preferably 65 to 90 vol.%, 70 to 90 vol.%, or 75 to 90 vol.%, based on the total solid content of the composition, in order to achieve high thermal conductivity. If the amount of the thermally conductive filler is less than the aforementioned lower limit, the thermal conductivity of the resulting composition is likely to be reduced, and the high thermal conductivity target of the present invention, in particular, a high thermal conductivity of 9.0 W/mK or more, might not be achieved. On the other hand, if the amount of Component (E) exceeds the upper limit of the aforementioned range, the viscosity of the resulting composition will be remarkably higher, or the initial hardness will be quite hard, and the handling workability, stress relaxing properties, and adhesion with respect to the substrate and the like may be reduced, even if Component (E) is added or used for surface-treating a filler.

Note that the total amount of the thermally conductive filler including Components (A) to (D) is more preferably in a range of 600 to 6,000 parts by mass, and particularly preferably in a range of 800 to 4,000 parts by mass, per 100 parts by mass of Component (F) described below. If the amount of the thermally conductive filler used is within the aforementioned volume percent range and the amount used relative to Component (F) satisfies the aforementioned range, the object of the present invention can be particularly suitably achieved.

The amount of Component (C) is in a range of 1.0 to 20.0 vol.%, more preferably 2.0 to 20.0 vol.%, and even more preferably 3.0 to 19.0 vol.%, based on the total solid content of the composition.

Component (D) is an optional component of the present invention, so the amount is in a range of 0.0 to 30.0 vol%, preferably 3.0 to 30.0 vol%, or 5.0 to 30.0 vol%, based on the total solid content of the composition.

Furthermore, the amount of the amorphous aluminum nitride powder selected from Component (B) and Component (C) is preferably 50 mass% or less, relative to the total solid content of the composition.

The total amount of the thermally conductive filler, which is aluminum nitride powder, is particularly preferably 60 mass% or less, relative to the total solid content of the composition. Aluminum nitride powder is prone to internal cracking due to ammonia gas generated by hydrolysis, and this tendency becomes more pronounced as the amount added increases, so using as little as possible is an effective solution to this problem.

Note that other thermally conductive fillers can improve the filling efficiency while providing low viscosity and high thermal conductivity by combining powders with large particle sizes and powders with small particle sizes in a ratio that follows the closest packing theoretical distribution curve, for example, in order to improve the filling efficiency.

### [Other Inorganic Fillers]

The composition of the present invention contains, as optional components, inorganic fillers such as fumed silica, wet-produced silica, crushed quartz, titanium oxide, magnesium carbonate, zinc oxide, iron oxide, diatomaceous earth, carbon black, and the like, and inorganic fillers where the surface of the inorganic filler has been hydrophobically treated with Component (E), described below, and/or another organic silicon compound (silazane and the like) can be added. However, from the viewpoint of achieving the technical effects of the present invention, namely, high thermal conductivity, flexibility and stress relaxation properties of the cured product, ease of extrusion from a cartridge or the like, and adhesion to a base material, the composition may be substantially free of fillers other than the thermally conductive filler including Components (A) to (D). On the other hand, the above fillers may be used in combination for other functions such as improvement of mechanical strength (reinforcement) and adjustment of viscosity to the extent that the technical effect of the present invention is not impaired, and these fillers are included in one of the preferred embodiments of the present invention.

### (Component (E))

Component (E) is a component that functions as a surface treatment agent for components (A) to (D), other thermally conductive fillers, and other inorganic fillers, and may coexist with these other components in the composition. From the viewpoints of uniform dispersion of these components and ease of handling and workability of the resulting composition, components (A) to (D) are particularly preferably surface-treated with at least a portion of component (E).

Component (E) is one or more component selected from siloxane compounds having an alkoxy group at one terminal (components (E1) and (E2)) and/or alkoxysilanes having a long-chain alkyl group (component (E3)), and more specifically, Component (E) is one or more components selected from the following components (E1) to (E3). Note that in order to further improve the extrusion workability of the composition and the heat aging properties and thermal conductivity of the cured product, component (E1) may be used, and in particular, component (E1) having a specific degree of siloxane polymerization may be used.

(E1) An organopolysiloxane having a viscosity of 10 to less than 10,000 mPa · s at 25°C, expressed by general formula (1): 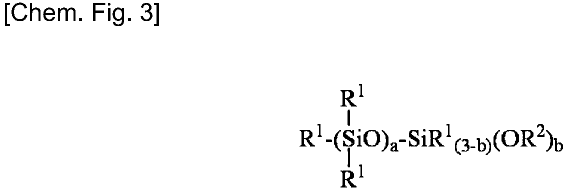 (In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is an integer from 5 to 250, and b is an integer from 1 to 3)

In General Formula (1), R¹ independently represents an unsubstituted or substituted monovalent hydrocarbon group, and examples include straight-chain alkyl groups, branched alkyl groups, cyclic alkyl groups, aryl groups, aralkyl groups, and alkyl halide groups. From an industrial perspective, R¹ is preferably a methyl group or a phenyl group, and is preferably a methyl group, from the perspective of heat resistance.

R² independently represents hydrogen atoms, alkyl groups, alkoxyalkyl groups, alkenyl groups, or acyl groups. From the perspective of surface treatment, R² is preferably an alkyl group, and is particularly preferably a methyl group or an ethyl group.

In General Formula (1), a is an integer in the range of 5 to 250, preferably in the range of 10 to 200. Also, b is an integer from 1 to 3, preferably 2 or 3. A suitable example of Component (E1) in the present invention is polydimethylsiloxane, where b is 3, a trialkoxysiloxy group is provided at one end of the molecular chain, and R¹ is a methyl group.

When the degree of siloxane polymerization a of component (E1) is in a range of 40 to 90, the extrusion workability of the composition and the heat aging properties and thermal conductivity of the cured product can be further improved. Therefore, as an optional configuration of the present invention, an organopolysiloxane can be preferably used in which at least a portion of component (E) contains component (E1), and component (E1) is an organopolysiloxane expressed by general formula (1) in which a is a number in a range of 40 to 90, 45 to 90, 50 to 90, or 50 to 80, and b is 3. Note that even in the case of an organopolysiloxane expressed by general formula (1), if the value of a is not within the aforementioned range (for example, if a is 30 or 100), the extrusion workability of the composition of the present invention and the heat aging properties of the cured product thereof may not be sufficiently improved as compared to a case where an organopolysiloxane in which a is within the aforementioned range is used as component (E1).

(E2) a siloxane compound having an alkenyl group and a hydrolyzable silyl group on a molecular end and a viscosity of 10 to less than 10,000 mPa ▪ s at 25°C, expressed by general formula (2):

R^{alk}R³₂SiO(R³₂SiO)_{c}R³₂Si-R⁴-SiR³_{(3-d)}(OR⁵)_{d}

(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3).

In general formula (2), R^{alk} represents an alkenyl group, and examples include vinyl groups, allyl groups, hexenyl groups, and other alkenyl groups with 2 to 10 carbon atoms. Component (E2) has an alkenyl group at one end of a molecular chain, and therefore may improve curability and adhesive properties when used in combination with other cross-linking agents or the like.

In the formula, R³ independently represents an unsubstituted or substituted monovalent hydrocarbon group that does not have a carbon-carbon double bond, with examples including straight-chain alkyl groups, branched alkyl groups, cyclic alkyl groups, alkenyl groups, aryl groups, aralkyl groups, or halogenated alkyl groups, and is a methyl group or phenyl group from an industrial perspective, preferably a methyl group from a heat resistance perspective. R⁴ represents an oxygen atom or a divalent hydrocarbon group. Examples of the divalent hydrocarbon group serving as R⁴ include methylene groups and other alkylene groups; and ethylene oxyethylene groups, ethylene oxypropylene groups, and other alkyleneoxyalkylene groups. On the other hand, R⁴ may be and is preferably an oxygen atom.

In the formula, R⁵ independently represents a hydrogen atom, an alkyl group, an alkoxyalkyl group, or an acyl group, and is preferably an alkyl group, particularly preferably a methyl group or an ethyl group, from a surface treatment perspective. Component (G2) has a hydrolyzable silyl group in the molecule with one-end structure expressed by Si(OR⁵), which provides excellent surface treatment effects when used in combination with Component (C).

In the formula, c represents the degree of polymerization (excluding ends) of diorganosiloxane units of Component (E2), and is an integer from 1 to 250, preferably from 1 to 100, and particularly preferably from 1 to 50. The integer d in the formula is an integer from 1 to 3, preferably 3. If d represents 3, one terminal of Component (E2) particularly preferably has a trimethoxysilyl group (-Si(OMe)₃).

The added amount of Component (E1) and Component (E2) (total amount when both components are used) is not particularly limited as long as the amount is sufficient for surface treatment of the filler, but as an example, the amount is in a range of 0.005 to 100 parts by mass, preferably 0.05 to 100 parts by mass, and more preferably 0.5 to 50 parts by mass, per 100 parts by mass of Component (F) in the entire composition.

(E3) One or more type of alkoxysilane having an alkyl group with 6 or more carbon atoms in a molecule, or a hydrolysis condensate thereof.

Component (E3), similar to Component (E1) and Component (E2), functions as a surface treatment agent for the thermally conductive filler including Components (A) to (D) in the composition, and is a component that improves the blending amount of the thermally conductive filler, improves the viscosity and flowability of the entire composition, and also improves the adhesive properties. The alkoxysilane must have a C6 or higher alkyl group, and if an alkylalkoxysilane containing only an alkyl group of less than C6, such as a methyl group or the like, or a hydrolyzed condensate thereof is used, sufficient adhesive properties cannot be achieved even if used in combination with an adhesion imparting agent, which are described later.

Specific examples of the alkyl group with 6 or more carbon atoms include hexyl groups, octyl groups, dodecyl groups, tetradecyl groups, hexadecyl groups, octadecyl groups, and other alkyl groups, benzyl groups, phenylethyl groups, and other aralkyl groups, and the like. Alkyl groups with 6 to 20 carbon atoms are particularly preferred.

Preferably, Component (E3) is an alkoxysilane represented by the structural formula:

YₙSi(OR)₄₋ₙ

(where Y represents an alkyl group with 6 to 18 carbon atoms, R represents an alkyl group with 1 to 5 carbon atoms, and n represents a number from 1 to 3).

Examples of the OR group include a methoxy group, an ethoxy group, a propoxy group, a butoxy group, and the like, and a methoxy group and a ethoxy group are particularly preferred.

Note that n represents 1, 2, or 3, and particularly preferably represents 1.

Examples of this component (E3) include: C₆H₁₃Si(OCH₃)₃, C₈H₁₇Si(OC₂H₅)₃, C₁₀H₂₁Si (OCH₃)₃, C₁₁H₂₃Si(OCH₃)₃, C₁₂H₂₅Si(OCH₃)₃, C₁₄H₂₉Si(OC₂H₅)₃, and the like, and most suitably decyltrimethoxysilane.

The amount of Component (E3) added is not particularly restricted so long as the amount is sufficient for surface treatment of the filler, and for example, is within a range of 0.005 to 20 parts by mass with respect to 100 parts by mass of Component (F) in the entire composition, and is preferably 0.05 to 10 parts by mass, and more preferably 0.5 to 7.5 parts by mass.

### [Surface treatment of thermally conductive filler containing Components (A) to (D) and other inorganic fillers]

In the present invention, components (A) to (D) and other thermally conductive fillers, as well as any inorganic fillers used as needed (hereinafter, these components are collectively referred to as "fillers"), are preferably surface-treated with at least a portion of the aforementioned component (E). Furthermore, these fillers may also be treated with various surface treatment agents known as coupling agents, in addition to the aforementioned components. Surface treatment agents for treating the filler of the present invention include components (E), as well as surfactants, other silane coupling agents, aluminum-based coupling agents, silicone-based surface treatment agents, and the like.

The method for surface treating the filler using these components is not particularly limited, but methods that can be used include direct treatment onto the filler, integral blending, a dry concentrate method, and the like. In the present invention, the most suitable example is a thermal surface treatment method in which a portion or all of Component (F) described below is mixed in advance with Component (E), and the filler is then sequentially mixed into the mixture, homogenized, and then heated (base heated), from the viewpoint of improving the fillability of the composition as a whole and the thermal conductivity, rubber physical properties, and adhesive strength of the cured product. In the surface treatment method, the mixture can be heated and stirred at 100 to 200°C under reduced pressure, and the temperature conditions and stirring time can be designed based on the amount of a sample, but are preferably within a range of 120 to 180°C and 0.25 to 10 hours. Note that the surface treatment step of the filler is optional, but from the viewpoint of improving the extrusion workability and thermal conductivity of the present composition, the surface treatment step may be a stepwise treatment step including a step in which at least a portion of the filler is surface-treated with one or more of component (E) selected from component (E1) and component (E2), and then the filler is surface-treated with component (E3). Note that in some cases, the extrusion workability of the composition can be particularly favorably improved by using an organopolysiloxane in which component (E) contains component (E1) and in which, in the general formula (1), a is a number in a range of 40 to 90 and b is 3.

The device used for mixing described above is not particularly limited, and examples include single or double-shaft continuous mixers, double rolls, Ross mixers, Hobart mixers, dental mixers, planetary mixers, kneader mixers, Henschel mixers, and the like.

### [(F) Matrix polymer]

Component (F) is a matrix polymer for supporting the aforementioned thermally conductive filler, and any curable or non-curable, liquid or flowable polymeric material having a viscosity at 25°C in a range of 10 to 1,000,000 mPa·s, preferably in a range of 10 to 10,000 mPa·s, can be used without any particular limitation. For example, organopolysiloxanes, liquid polyurethane resins, liquid polyester resins, liquid acrylic resins, liquid polyol resins, liquid butadiene rubber, liquid isoprene rubber, liquid styrene-butadiene rubber, and the like can be used without limitation. However, the thermally conductive composition according to the present invention is applied to semiconductor devices and the like that generate high temperatures, so the thermally conductive composition particularly preferably contains one or more organopolysiloxanes (F0) that have excellent heat resistance and cold resistance and have a viscosity at 25°C in a range of 10 to 1,000,000 mPa·s. Note that any component that falls under any of the aforementioned components (E) is expressly excluded from the scope of component (F).

The organopolysiloxane of Component (F0) is the main component of the composition, and contains one or more organopolysiloxane having a viscosity at 25°C in a range of 10 to 1,000,000 mPa·s. The viscosity of component (F) at 25°C is preferably within a range of 10 to 100,00 mPa•s, more preferably within a range of 10 to 10,000 mPa•s. If the viscosity of Component (F) is less than 10 mPa·s, the mechanical strength of the resulting organopolysiloxane composition or cured product thereof tends to decrease. On the other hand, if the viscosity of Component (F) exceeds 100,000 mPa·s, the resulting composition will have too high viscosity, and the handling workability and coatability on fine parts tend to decrease. Note that low molecular weight siloxane oligomers (octamethyltetrasiloxane (D4) and decamethylpentasiloxane (D5)) are preferably reduced or removed from Component (F), from the perspective of preventing contact failure.

Component (F) may contain one or more types of organopolysiloxanes. The molecular structure of such an organopolysiloxane is not particularly limited, with examples thereof including straight-chain, branched, cyclic, three-dimensional network structures (including so-called resinous three-dimensional structures), and combinations thereof.

Depending on the presence or absence of curing reactive groups in Component (F), the composition can be designed as a curable or non-curable composition. Here, the curing reactive group is a functional group that can cure (including gelling, the same applies hereinafter) the entire composition through a crosslinking reaction, and the type of the curing reactive group is not particularly limited, but is preferably a hydrosilylation reactive group or a radical polymerization reactive group, and is particularly preferably a curing reactive group having a carbon-carbon double bond in the molecule. Furthermore, the curing reactive group having a carbon-carbon double bond in the molecule is preferably at least one organic group selected from alkenyl groups, methacryloxy group-containing organic groups, and acryloxy group-containing organic groups, and is particularly preferably an alkenyl group having 2 to 20 carbon atoms.

Preferably, Component (F) is one or more organopolysiloxanes selected from (F1) organopolysiloxanes that do not have a curing reactive group with a carbon-carbon double bond in the molecule, and (F2) organopolysiloxanes that have a curing reactive group with a carbon-carbon double bond in the molecule, and using only Component (F1), using only Component (F2), or using both in combination is possible. Note that when Component (F2) is used as at least a portion of Component (F), the composition can be designed to be curable.

Component (F1) is an organopolysiloxane that has a carbon-carbon double bond in the molecule but does not contain a curing reactive group typified by the aforementioned alkenyl groups, methacryloxy group-containing organic groups, or acryloxy group-containing organic groups in the molecule, and therefore is suitable as a base agent for non-curable thermally conductive organopolysiloxane compositions, such as thermally conductive greases and non-curable thermally conductive gap filler materials. The functional group in Component (F1) is a group other than a curing reactive functional group, and examples thereof include monovalent hydrocarbon groups other than alkenyl groups, such as alkyl groups like methyl groups and the like; aryl groups such as phenyl groups and the like; and halogenated alkyl groups such as 3,3,3-trifluoropropyl groups and the like, with methyl or phenyl groups being industrially preferred.

Particularly preferred examples of Component (F1) are linear, non-curable organopolysiloxanes, such as dimethylpolysiloxanes terminally blocked with trimethylsiloxy groups, dimethylsiloxane-methylphenylsiloxane copolymers terminally blocked with trimethylsiloxy groups, dimethylsiloxane copolymers terminally blocked with silanol groups, polymers in which a portion of the methyl groups in these polymers have been substituted with alkyl groups other than methyl groups, such as ethyl groups, propyl groups, or the like, or with halogenated alkyl groups such as 3,3,3-trifluoropropyl groups and the like, as well as mixtures of two or more of these polymers.

Component (F2) is an organopolysiloxane having a curable reactive group with a carbon-carbon double bond in the molecule, and the curable reactive group having a carbon-carbon double bond in the molecule has at least one organic group selected from alkenyl groups, methacryloxy group-containing organic groups, and acryloxy group-containing organic groups in the molecule. Therefore, Component (F2) is suitable as a base agent for curable thermally conductive organopolysiloxane compositions, such as curable thermally conductive elastomers, thermally conductive gels, and curable thermally conductive gap filler materials.

Examples of the alkenyl groups in a molecule of Component (F2) include vinyl groups, allyl groups, butenyl groups, hexenyl groups, and the like. Furthermore, examples of organic groups other than alkenyl groups in Component (F2) include: methyl groups and other alkyl groups; phenyl groups and other aryl groups; and monovalent hydrocarbon groups other than alkenyl groups such as 3,3,3-trifluoropropyl groups and other halogenated alkyl groups, but methyl groups or phenyl groups are preferred from an industrial perspective.

Component (F2) is particularly preferably a straight-chain alkenyl group-containing organopolysiloxane, with examples including: dimethylpolysiloxane blocked with dimethylvinylsiloxy groups at both ends of a molecular chain; a dimethylsiloxane/methylphenylsiloxane copolymer blocked with dimethylvinylsiloxy groups at both ends of a molecular chain; a dimethylsiloxane/methylvinylsiloxane copolymer blocked with trimethylsiloxy groups at both ends of a molecular chain; a dimethylsiloxane/methylvinylsiloxane/methylphenylsiloxane copolymer blocked with trimethylsiloxy groups at both ends of a molecular chain; a dimethylsiloxane/methylvinylsiloxane copolymer blocked with silanol groups at both ends of a molecular chain; polymers in which a portion of the methyl groups of these polymers are substituted with alkyl groups other than methyl groups such as ethyl groups, propyl groups, and the like, and halogenated alkyl groups such as 3,3,3-trifluoropropyl groups and the like; polymers in which vinyl groups of these polymers are substituted with alkenyl groups other than vinyl groups such as allyl groups, butenyl groups, hexenyl groups, and the like; and mixtures of two or more of these polymers.

When Component (F) contains Component (F2), the composition may and preferably contains, as a curing agent, (G) an organohydrogenpolysiloxane, and (H) a catalytic amount of a hydrosilylation reaction catalyst.

### [(G) Organohydrogenpolysiloxane]

Component (G) is a main crosslinking agent of the composition of the present invention and while an organohydrogenpolysiloxane having two or more silicon atom-bonded hydrogen atoms in a molecule can be used without limitation, from the perspective of the flexibility and adhesion retention of the resulting cured product to a substrate, the number (average value) of silicon atom-bonded hydrogen atoms in the organohydrogenpolysiloxane molecule preferably does not exceed 8. In particular, it is preferable to at least include (G1) a straight-chain organohydrogenpolysiloxane having a viscosity at 25 °C of 1 to 1,000 mPa-s and containing on average 2 to 4 silicon atom-bonded hydrogen atoms in the molecule, of which at least an average of 1 is in a molecular side chain.

Examples of component (G1) include: a methylhydrogen siloxane-dimethylsiloxane copolymer capped at both molecular terminals with trimethylsiloxy groups and a methylhydrogen siloxane-dimethylsiloxane copolymer capped at both molecular terminals with dimethylhydrogensiloxy groups. Note that these examples are non-limiting, and some of the methyl groups may be substituted with phenyl groups, hydroxyl groups, alkoxy groups, and the like.

While the viscosity of component (G1) at 25°C is not particularly limited, the viscosity is preferably within a range of 1 to 500 mPa·s, and particularly preferably within a range of 1 to 100 mPa·s. Moreover, from the perspective of preventing contact failure and the like, the amount of low molecular weight siloxane oligomer (octamethyltetrasiloxane (D4) and decamethylpentasiloxane (D5)) is preferably reduced or eliminated.

### [Amount of the organohydrogenpolysiloxane (crosslinking agent) in the composition]

The composition of the present invention particularly preferably contains Component (G) in an amount that results in 0.2 to 5.0 moles, 0.3 to 3.0 moles, or 0.4 to 2.0 moles of silicon-bonded hydrogen atoms in Component (G) per mole of alkenyl groups in at least Component (F), from the viewpoint of the rubber properties, mechanical strength, and adhesive properties of the resulting organopolysiloxane cured product.

### [(H) Hydrosilylation reaction catalyst]

The hydrosilylation-reaction catalyst is a component used in curing the present composition. Examples include a platinum-based catalyst, a rhodium-based catalyst, and a palladium-based catalyst, and a platinum-based catalyst is preferred because a platinum-based catalyst can significantly promote curing of the present composition. Exemplary platinum-based catalysts include platinum fine powder, chloroplatinic acid, an alcohol solution of chloroplatinic acid, a platinum-alkenyl siloxane complex, a platinum-olefin complex, a platinum-carbonyl complex, and a catalyst in which these platinum-based catalysts are dispersed or encapsulated with a thermoplastic resin such as silicone resin, polycarbonate resin, acrylic resin, or the like, with a platinum-alkenyl siloxane complex particularly preferable. In particular, a 1,3-divinyl-1,1,3,3-tetramethyldisiloxane complex of platinum is preferred, and is preferably added in the form of an alkenylsiloxane solution of the complex. In addition, in terms of improving the handleability as well as the pot life of the composition, a platinum containing hydrosilylation reaction catalyst in microparticles dispersed and encapsulated with thermoplastic resin may be used. It should be noted that as the catalyst for promoting the hydrosilylation reaction, a non-platinum-based metal catalyst such as iron, ruthenium, iron/cobalt, or the like may be used.

On the other hand, a so-called high energy beam-activated or photoactivated catalyst such as a (methylcyclopentadienyl)trimethyl platinum(IV) complex, bis(2,4-pentanedionato) platinum(II) complex, or the like may be used as the hydrosilylation-reaction catalyst. By using such a hydrosilylation-reaction catalyst, the composition as a whole can be cured even at low temperatures triggered by irradiation with a high energy beam, storage stability is excellent, and reaction control is facilitated. Thus, the properties of excellent handling workability may be achieved. In this case, ultraviolet light is preferred as the high energy beam from the perspective of catalytic activation efficiency, and ultraviolet light in a wavelength range of 280 to 380 nm is preferred from the perspective of industrial use. Furthermore, the irradiation dose varies depending on the type of high energy beam activated catalyst, but in the case of ultraviolet light, the integrated irradiation dose at a wavelength of 365 nm is preferably within a range of 100 mJ/cm² to 100 J/cm².

The amount of the hydrosilylation catalyst added may be any catalytic amount, and more specifically, an amount that results in a metal atom concentration in a range of 0.01 to 500 ppm by mass, 0.01 to 100 ppm by mass, or 0.01 to 50 ppm by mass, relative to the total composition.

### [(J) Fatty acid compounds]

If the composition of the present invention is curable, the composition may optionally contain, in addition to the above components, at least one fatty acid compound selected from fatty acid esters and fatty acid metal salts. This component is a component that inhibits hardness change during heat aging of the composition and of the cured component, which is a silicone-based thermally conductive member made by curing the composition. In particular, when the amount of the aforementioned thermally conductive filler is within the above range, even if Component (J) is not used, there are cases where the cured material may harden rapidly during heat aging, resulting in loss of stress relaxation properties, flexibility substrate adhesion, and the like. However, when Component (J) and especially Component (K), which is a heat resistance imparting agent, are used together as described below in the hydrosilylation-curing reactive composition, the resulting cured material will have high thermal conductivity, maintain the initial hardness and rubber properties, and achieve favorable stress relaxation, flexibility, and substrate adhesion.

Component (J) is at least one or more of fatty acids, fatty acid esters, or fatty acid metal salts, and specific examples include: fatty acids such as caproic acid, caprylic acid, peralgonic acid, capric acid, undecanoic acid, lauric acid, myristic acid, palmitic acid, stearic acid, behenic acid, oleic acid, and the like; fatty acid esters that are alkyl esters of these fatty acids; alkali metal salts of fatty acids such as salts of sodium, lithium, potassium, and the like; alkaline earth metal salts of fatty acids such as salts of calcium, and the like. Preferably, Component (J) is at least one or more of (J1) saturated fatty acids and saturated fatty acid metal salts, and is particularly preferably (J1-1) one or more of stearic acid, alkali metal salts of stearic acid, and alkaline earth metal salts of stearic acid.

Although the mechanism by which Component (J) inhibits the hardness change of the cured product, especially in combination with Component (K), has not been clearly identified, it has been hypothesized that the presence of a limited amount of fatty acid compounds such as fatty acids, fatty acid salts (soaps), fatty acid esters, and the like in the silicone cured product matrix with improved heat resistance in the presence of Component (K) may result in the formation of a water-resistant and lubricious thin film or local structure of these fatty acid compounds on or near the particle surface of the thermally conductive filler, thus chemically deactivating or inactivating the particle surface at high temperature, and effectively preventing aggregation between surfaces and formation of coarse particles of the thermally conductive filler. However, Component (J) does not need to be used as a surface treatment agent for the thermally conductive filler, and the technical effect can be achieved simply by uniformly mixing with other components. Therefore, the timing of adding Component (J) to the composition of the present invention is not limited.

The amount of Component (J) to be added is preferably in a range of 0.05 to 2.0 parts by mass per 100 parts by mass of the thermally conductive filler containing components (A) to (D) (total amount when a plurality of components are used). In order to achieve the aforementioned technical effects in particular, the amount of Component (D) must be within the above-mentioned range, and the above-mentioned range has critical significance. In other words, if the amount of Component (J) is less than the lower limit mentioned above, hardness change of the cured material may not be suppressed, even if Component (J) is used together with Component (K). On the other hand, if the amount of Component (J) exceeds the aforementioned upper limit, the hardness change of the cured material might not be suppressed.

### [(K) Heat resistance imparting agent]

In addition to the above components, the composition of the present invention may optionally contain a heat resistance imparting agent. The heat resistance-imparting agent can be added alone, but the composition and cured product of the present invention can achieve the aforementioned technical effects by containing a certain amount of the aforementioned Component (J) fatty acid-based compound in combination with Component (K), the heat resistance imparting agent. The blended amount of the heat resistance-imparting agent may be within a range of 0.01 to 5.0 mass% (solid fraction) of the total composition, or may be within a range of 0.05 to 2.0 mass%, or 0.07 to 0.5 mass%.

Examples of the heat resistance-imparting agent include iron oxide, titanium oxide, cerium oxide, magnesium oxide, zinc oxide, and other metal oxides, cerium hydroxide and other metal hydroxides, phthalocyanine compounds, cerium silanolate, cerium fatty acid salts, reaction products of an organopolysiloxane with a cerium carboxylic acid salt, carbon black, and the like. Particularly suitably, Component (K1) is a phthalocyanine compound, for example, an additive selected from the group consisting of a metal-free phthalocyanine compound and a metal-containing phthalocyanine compound disclosed in JP 2014-503680 W is suitably used, with copper phthalocyanine compounds particularly suitable among the metal-containing phthalocyanine compounds. One example of the most suitable and non-limiting heat resistance imparting agent is 29 H,31H-phthalocyaninato(2-)-N29,N30,N31,N32 copper. Such phthalocyanine compounds are commercially available, for example, Stan-tone (trademark) 40SP03 from PolyOne Corporation (Avon Lake, Ohio, USA.) Similarly, the heat aging properties at temperatures of 180°C or higher and the high-temperature heat resistance can be preferably improved by blending (K2) carbon black as a heat resistance imparting agent in an amount of 0.1 to 5 mass%, preferably 0.2 to 2 mass%, based on the total mass of the composition.

### [(L) Hydrosilylation reaction inhibitor, adhesion promoter, organic solvent and other additives]

The composition of the present invention essentially contains Components (A) to (F). When Component (F) contains curable Component (F2), components (G) and (H) are preferably included, and more preferably one or more selected from components (J), and (K) are included. Components (J), and (K) are particularly preferably included in combination, but the composition may further contain the following other components. In particular, if the present composition is curable, the use of a hydrosilylation reaction inhibitor is particularly preferred.

### [Hydrosilylation Reaction Inhibitor]

If the composition of the present invention is curable, the composition preferably contains a hydrosilylation reaction inhibitor, from the viewpoint of handling and workability. The hydrosilylation reaction inhibitor is a component for suppressing the hydrosilylation reaction of the thermally conductive organopolysiloxane composition according to the present invention, with specific examples thereof including reaction inhibitors such as acetylenic inhibitors (such as ethynyl cyclohexanol), amine-based inhibitors, carboxylic acid ester-based inhibitors, and phosphite ester-based inhibitors. The amount of the reaction inhibitor added is usually 0.001 to 5 mass% of the entire thermally conductive organopolysiloxane composition. In particular, acetylene compounds such as 3-methyl-1-butyn-3-ol, 3,5-dimethyl-1-hexyn-3-ol, and 3-phenyl-1-butyn-3-ol (=phenylbutynol); eneyne compounds such as 3-methyl-3-penten-1-yne and 3,5-dimethyl-3-hexen-1-yne; cycloalkenylsiloxanes such as 1,3,5,7-tetramethyl-1,3,5,7-tetravinylcyclotetrasiloxane and 1,3,5,7-tetramethyl-1,3,5,7-tetrahexenylcyclotetrasiloxane; methyltris-1,1-dimethyl-2-propynyloxysilane; and triazole compounds such as benzotriazole can be used without particular limitation for the purpose of improving the handling properties of the present composition.

### [Adhesion-imparting agent]

The composition of the present invention may also contain an adhesion-imparting agent for the purpose of improving the adhesive strength of the cured product and the permanent adhesion to the substrate. The adhesion-imparting agent that can be used in the present invention may be one or more selected from the following conventionally known adhesion-imparting agents, namely, reaction mixtures of an amino group-containing organoalkoxysilane and an epoxy group-containing organoalkoxysilane (including carbasilatrane derivatives and silatrane derivatives having a specific structure), organic compounds having two or more alkoxysilyl groups in a molecule, such as disilyalkane compounds (e.g., 1,6-bis(trimethoxysilyl)hexane), and epoxy group-containing silanes or partially hydrolyzed condensates thereof, and two or more adhesion-imparting agents selected therefrom may and preferably are used in combination.

Preferably, the adhesion-imparting agent contains:
(L-1) an epoxy group-containing silane expressed by the general formula:

   R^{a}ₙSi(OR^{b})₄₋ₙ

   (where R^{a} represents an organic group containing a monovalent epoxy group,
   R^{b} represents an alkyl group with 1 to 6 carbon atoms, or a hydrogen atom.
   n represents a number within a range of 1 to 3),
   or a partially hydrolyzed condensate thereof; and
(L-2) an organic compound having at least two alkoxysilyl groups in a molecule, in addition to containing a bond other than a silicon-oxygen bond between the silyl groups;
at a mass ratio of 5:95 to 95:5, preferably a mass ratio of 50:50 to 95:5, and more preferably at a mass ratio of 60:40 to 90:30.
Note that these components alone will improve the initial adhesion of organopolysiloxane cured products, but when used in combination at the mass ratio described above, the initial adhesion, adhesive durability, and adhesive strength (permanent adhesion) of the organopolysiloxane cured products may be greatly improved.

Examples of component (L-1) described above include 3-glycidoxyprolyltrimethoxysilane, 3-glycidoxypropylmethyldimethoxysilane, 2-(3,4-epoxy cyclohexyl)ethyltrimethoxysilane, and 2-(3,4-epoxy cyclohexyl)ethylmethyldimethoxysilane.

Examples of component (L-2) described above include 1,6-bis(trimethoxysilyl)hexane, 1,6-bis(triethoxysilyl)hexane, 1,4-bis(trimethoxysilyl)hexane, 1,5-bis(trimethoxysilyl)hexane, 2,5-bis(trimethoxysilyl)hexane, 1-methyldimethoxysilyl-6-trimethoxysilylhexane, 1-phenyldiethoxysilyl-6-triethoxysilylhexane, and 1,6-bis(methyldimethoxysilyl)hexane, and other disilyalkanes.

Reaction mixtures of amino group-containing organoalkoxysilanes and epoxy group-containing organoalkoxysilanes (including carbasilatrane and silatrane derivatives having specific structures) disclosed in Japanese Examined Patent Application Publication No. S52-8854 and Japanese Unexamined Patent Application H10-195085 may be further used as adhesion-imparting agents other than the components (L-1) and (L-2) above.

### [Organic solvents and other additives]

In addition to the components described above, the thermally conductive composition of the present invention may have optional components blended in to the extent that the purpose of the present invention is not impaired. Exemplary optional components include cold resistance imparting agents, flame retardants, pigments, dyes, etc. Furthermore, the thermally conductive composition of the present invention may optionally contain one or more commonly known surfactants such as antistatic agents; dielectric fillers; electrically conductive fillers; mold-release agents; thixotropic agents; antifungal agents; and the like. If desired, an organic solvent may be added.

### [Manufacturing Method and Dosage Form of Composition]

The thermally conductive composition of the present invention can be prepared by mixing the aforementioned components, and examples of the mixing device include the same devices as those exemplified for the surface treatment of the filler. As described above, Component (J) may be added at any timing after surface treatment and base heating of the filler, or added with the surface treatment agent of the filler, and either timing can be used to achieve the technical effects of the present invention.

More specifically, the composition according to the present invention is preferably produced by either one of the following production methods (mixing process):
i) a production method including a step of mixing component (F), the filler, and component (E), followed by heating and mixing the mixture, and then optionally mixing component (J) and other components; or
ii) a production method including a step of mixing component (F), the filler, and optionally component (J) and component (E), followed by heating and mixing the mixture, and then mixing other components.
Note that the heating conditions are the same as the base heat conditions described earlier for the surface treatment of the filler, and preferably, the entire mixture is made substantially uniform during mixing.

The thermally conductive composition according to the present invention may be a one-component composition, optionally including the aforementioned hydrosilylation reaction inhibitor and other components, or a multi-component composition containing two or more compositions that are stored separately. A multi-component composition must not simultaneously contain Component (F) containing Component (F2), Component (G) and Component (H). This is because when these components (main component, crosslinking agent, and catalyst) are blended simultaneously, a crosslinking reaction starts spontaneously and the storage stability of the composition is lost in a short period of time, and thus the long-term storage stability and handling workability, which are objectives of a multi-component composition, may not be achieved. Note that the multi-component composition is coated or applied after being mixed in a common container at the time of use using a mixer or other mechanical force, or using a dispenser or the like capable of mixing a plurality of components.

The thermally conductive composition of the present invention has extremely high thermal conductivity, and the cured product thereof has excellent flexibility and stress relaxation properties. In addition, the composition can be easily extruded from a cartridge or dispenser, and has excellent work efficiency, filling properties, and applicability. Therefore, even when the composition is used by filling a small amount into, for example, a small-scale syringe of about 10 to 300 mL, there is an advantage of excellent workability during application to a heat-dissipating site and during extrusion. Therefore, the present composition has an advantage of being easily filled into small-scale cartridges or syringes and is easily applicable to small-scale package production. In particular, if the thermally conductive composition of the present invention contains component (E1) as component (E) and uses an organopolysiloxane in which, in general formula (1), a is a number in a range of 40 to 90 and b is 3, the extrusion workability can be further improved in some cases, and thus the thermally conductive composition is particularly suitable for small-lot package production.

### [Use of Uncurable/Uncured Composition]

The thermally conductive composition of the present invention can be applied in an uncurable or uncured state to a heat dissipation component or a circuit board on which the heat dissipation component is mounted, in order to obtain a heat dissipation structure containing an uncured heat dissipation member (examples of which include thermally conductive grease and uncured thermally conductive gap filler material).

### [Curability]

When at least a portion of Component (F) contains curable Component (F2), the thermally conductive composition of the present invention cures via a hydrosilylation reaction to form a cured product that has excellent thermal conductivity, suppresses changes in hardness even after heat aging, and is excellent in flexibility and stress relaxation properties. While not particularly limited thereto, the temperature conditions for curing the hydrosilylation curing type composition are normally within a range of 20°C to 200°C, preferably 20°C to 150°C, and more preferably within a range of 20 to 80°C. If desired, curing may be performed in a short time at a high temperature, or curing may be performed over a long time (for example, several hours to several days) at a low temperature such as room temperature, and there are no particular limitations. Note that curing may be triggered by irradiation of a high-energy beam by selecting a high-energy beam-activated or photo-activated catalyst as at least a portion of Component (H).

By using the thermally conductive composition according to the present invention, a heat dissipating structure can be obtained by applying the curable thermally conductive composition described above to a heat dissipating component or a circuit board on which the heat dissipating component is mounted, and forming a cured product at a temperature of 20°C to 150°C, preferably less than 130°C, such as in a range of 20 to 125°C, in order to provide a heat dissipating member.

### [Thermal conductivity]

The thermally conductive composition of the present invention can be stably and highly filled with a thermally conductive filler, and preferably has a thermal conductivity of 9.0 W/mK or more, particularly preferably 9.1 W/mK or more. Note that the thermally conductive composition of the present invention can be designed to have a thermal conductivity of 9.0 to 15.0 W/mK, and optionally a thermal conductivity of 9.1 to 14.0 W/mK, and the composition has excellent workability, such as extrudability and dispensability from a cartridge or the like. Furthermore, the present composition may be non-curable or curable. If the composition is curable, the use of components (J) and (K) (particularly the use of at least one of a phthalocyanine compound as component (K1) and carbon black as component (K2)) suppresses changes in hardness even after heat aging, and thus a thermally conductive cured product can be provided with excellent flexibility and stress relaxation properties. Similarly, by using an organopolysiloxane that contains component (E1) as component (E) and in which, in the general formula (1), a is a number in a range of 40 to 90 and b is 3, not only extrusion workability and thermal conductivity, but also heat aging properties can be favorably improved, particularly at high temperatures.

### [Applications and Heat Dissipation Structures]

The thermally conductive composition of the present invention and cured product thereof is useful as a heat transfer material (thermally conductive member) to be interposed at the interface between a thermal boundary surface of a heat-generating component and a heat dissipating member such as a heat sink or a circuit board for cooling of the heat-generating component by heat conduction, and thus a heat dissipating structure can be formed using the composition. Herein, although the type, size, and fine parts of a heat-generating component are not particularly limited, the thermally conductive composition of the present invention or the cured product obtained by curing this composition not only provides high thermal conductivity and excellent initial adhesion and adhesive strength to a member, but can also suppress changes in hardness over a long period of time, and even after heat aging can maintain flexibility and stress relaxation, and thus provides resistance to peeling or separating from heat generating members due to vibration and the like, has high adhesion and followability, and has excellent industrial productivity, making it suitable for automotive components, electrical or electronic components, and heat dissipating structures for electrical or electronic devices including cell-type secondary batteries.

Although the structure of such a heat dissipating structure is not particularly limited, an example is a heat dissipation structure with a heat dissipating member provided via a thermally conductive composition or cured product thereof on a heat dissipating component or a circuit board on which this heat dissipating component is mounted. Such a structure is exemplified, for example, by a structure in which an electronic component, which is a heat dissipating component, is mounted on a circuit board and the heat generated by the electronic component is dissipated by heat dissipating members via a thin film layer of the thermally conductive composition or a cured product thereof, and these members may be preferably provided not only on a horizontal surface but also on an inclined or vertical surface because the change in hardness after heat aging is minimal, flexibility and stress relaxation of the heat dissipating member is maintained, and the bonding properties and tracking properties are excellent, which are the features of the present invention.

In such a heat dissipating structure, the thickness of the thermally conductive composition or cured product thereof is not particularly limited, but may be within a range of 0.1 to 100 mm to efficiently transfer heat generated from an electronic Component filled with the composition or cured product thereof without a gap to a heat dissipating member.

Electrical and electronic devices equipped with a member made up of the thermally conductive composition are not particularly limited, but include: for example, secondary batteries such as cell-based lithium-ion electrode secondary batteries and cell-stack fuel cells; electronic circuit boards such as printed circuit boards; IC chips packaged with optical semiconductor elements such as diodes (LEDs), organic electric field elements (organic EL), laser diodes and LED arrays; CPUs used in electronic devices such as personal computers, digital video disks, mobile phones, and smartphones; and LSI chips such as driver ICs and memory, and the like. In particular, in high performance digital switching circuits formed with high integration density, heat removal (heat dissipation) is a major factor in the performance and reliability of the integrated circuits. Thermally conductive members containing the thermally conductive organopolysiloxane composition of the present invention have superior heat dissipation and handling workability when applied to power semiconductor applications such as engine control, power train systems, air conditioner control, and the like in transportation equipment, and can also maintain a strong adhesive force with a member and achieve superior heat resistance and thermal conductivity when incorporated into in-vehicle electronic components such as electronic control units (ECU) and the like, even when used in harsh environments.

### EXAMPLES

The present invention will be described below by way of examples; however, the present invention is not limited thereto. In the Examples and Comparative Examples shown below, the following compounds or compositions were used as raw materials. Note that the average particle diameter of the thermally conductive filler is the cumulative average particle diameter D50 (median diameter) in the volume-based particle size distribution measured by the laser diffraction scattering method, and defines the coarse particle content (vol.%) determined by the same method.

### [Preparation of composition and preparation of thermally conductive silicone cured product (evaluation samples)]

The components were mixed by the method described below to obtain the thermally conductive compositions of Examples 1 to 12 and Comparative Examples 1 to 6 (hereinafter sometimes referred to as "thermally conductive silicone composition"). Furthermore, for cases where the composition has curing reactivity, the thermally conductive silicone composition was filled into a mold measuring 6 mm in height, 50 mm in length, and 30 mm in width, and cured at 80°C for 30 minutes, after which the composition was removed from the mold to obtain a cured thermally conductive silicone product. The hardness of the resulting thermally conductive silicone cured product was measured by the following method.

### [Hardness (Type E hardness)]

Hardness was measured by overlapping two thermally conductive silicone cured products obtained under the above conditions and measuring the value after 3 seconds using an ASKER TYPE E hardness tester manufactured by ASKER.

### [Thermoelectric conductivity]

The thermal conductivity was measured using a Dyn TIM tester (manufactured by Siemens AG). The thermal resistance was measured when the thickness of the thermally conductive composition was 800 µm, 600 µm, 400 µm, and 200 µm, and the thermal conductivity was calculated from the slope of the measurements.

### [Extrusion amount]

The extrusion amount was measured in terms of the weight extruded per minute by filling a 30 cc EFD syringe (manufactured by Nordson Corporation) with the thermally conductive composition and extruding the composition at an extrusion pressure of 80 psi.

The composition of the present invention is formed using each of the following components. Note that of all of the thermally conductive fillers used in the examples, the amount of added irregular aluminum nitride powder particles having an average particle size of less than 2.0 µm was 0 vol.%.

### Component (A):

A-1: Irregular zinc oxide powder with an average particle size of 0.12 µm
A-2: Polyhedral spherical α-type aluminum oxide powder with an average particle diameter of 0.5 µm
A-3: Polyhedral spherical α-type aluminum oxide powder with an average particle diameter of 0.24 µm

### Component (B):

B-1: Polyhedral α-type aluminum oxide powder with an average particle diameter of 2 µm
B-2: Irregular shaped aluminum nitride powder with an average particle size of 19 µm and 0 vol.% of particles of 2.5 µm or less
B-3: Irregular shaped aluminum nitride powder with an average particle size of 28 µm and 0 vol.% of particles of 6 µm or less
Non-B-1: Irregular aluminum nitride powder with an average particle size of 2 µm (45.3 vol.% of particles smaller than 2 µm)
Non-B-2: Irregular aluminum nitride powder with an average particle size of 1.2 µm

### Component (C):

C-1: Irregular shaped aluminum nitride powder with an average particle size of 30 µm and 0 vol.% of particles 3 µm or smaller
C-2: Irregular shaped aluminum nitride powder with an average particle size of 100 µm and 0 vol.% of particles 26 µm or smaller
C-3: Irregular shaped aluminum nitride powder with an average particle size of 157 µm and 0 vol.% of particles 52 µm or smaller

### Component (D):

D-1: Spherical aluminum nitride powder with an average particle size of 80 µm

### Component (X):

X-1: Spherical magnesium oxide powder with an average particle size of 120 µm
X-2: Spherical fused and solidified aluminum oxide powder with an average particle size of 90 µm

### Component (E):

(E-1): Organopolysiloxane as expressed by the formula:

   (CH₃)₃SiO[(CH₃)₂SiO]₃₀Si(OCH₃)₃
(E-2): Organopolysiloxane expressed by the formula:

   (C₂H₅)(CH₃)₂SiO[(CH₃)₂SiO]₂₇Si(OCH₃)₃
E-3: Decyltrimethoxysilane
(E-4): Organopolysiloxane as expressed by the formula:

   (CH₃)₃SiO[(CH₃)₂SiO]₆₀Si(OCH₃)₃

### Component (F):

F-1: Dimethylpolysiloxane terminated at both terminals of the molecular chain using trimethylsiloxy groups (viscosity 20 mPa·s)
F-2: Dimethylpolysiloxane blocked with dimethylvinylsiloxy groups at both ends of a molecular chain (viscosity: 60 mPa·s, amount of Vi: 1.53 mass%)
F-3: Dimethylpolysiloxane blocked with dimethylvinylsiloxy groups at both ends of a molecular chain (viscosity: 28 mPa·s, amount of Vi: 2.3 mass%)

### Component (G):

G-1: Methylhydrogen siloxane-dimethylsiloxane copolymer capped at both molecular terminals with trimethylsiloxy groups, average of 2 in the molecule, average of 2 in the side molecular chain (viscosity: 20 mPa·s, Si-H content: 0.10 mass%)
G-2: Methylhydrogen siloxane-dimethylsiloxane copolymer capped at both molecular terminals with trimethylsiloxy groups, average of 5 in the molecule, average of 5 in the side molecular chain (viscosity: 5 mPa·s, Si-H content: 0.77 mass%)
G-3: Methylhydrogen siloxane-dimethylsiloxane copolymer capped at both molecular terminals with trimethylsiloxy groups, average of 3 in the molecule, average of 3 in the side molecular chain (viscosity: 12 mPa·s, Si-H content: 0.21 mass%)
G-4: 1,1,1,3,5,5,5-heptamethyltrisiloxane (Si-H content 0.45 mass%)

### Component (H):

H-1: Complex of platinum and 1,3-divinyl-1,1,3,3-tetramethyldisiloxane with a platinum concentration of 0.6 wt.%

### Component (Y):

Y-1: Phenylbutynol
Y-2: Methyltris-1,1-dimethyl-2-propynyloxysilane

### Component (K):

K-1: 29H,31H-phthalocyaninato(2-)-N29,N30,N31,N32-copper

### Other Components:

### Component (J-1): Calcium stearate (FUJIFILM Wako Pure Chemical Corporation)

(K-2-1) Carbon black-1: manufactured by Cancarb Limited, product number THERMAX FLOFORM N-990 (particle size 280 nm, specific surface area 9 m²/g)
(K-2-2) Carbon Black-2: Denka Black, manufactured by Denka Co., Ltd. (particle size 36 nm, specific surface area 58 m²/g)
(K-2-3) Carbon Black-3: Asahi Carbon Co., Ltd., product number SUNBLACK 235 (particle size 78 nm, specific surface area 21 m²/g)

### [Example 1]

16.5 parts by mass of component (A-1), 29.5 parts by mass of component (B-1), 18.0 parts by mass of component (C-1), 1.50 parts by mass of component (E-1), 0.20 parts by mass of component (E-3), and 2.73 parts by mass of component (F-1) were weighed into a 300 mL plastic container, and mixed for 1 minute at 2000 rpm using a THINKY Planetary Vacuum Mixer. Next, 10.8 parts by mass of component (D-1) and 20.77 parts by mass of component (X-1) were added and mixed at 2000 rpm for 1 minute. After scraping off the components on the wall of the plastic container with a spatula, the mixture was mixed at 2000 rpm for 1 minute. After cooling to room temperature, the mixture was degassed under vacuum for 3 minutes to prepare a thermally conductive silicone composition.

### [Example 2]

24.0 parts by mass of component (A-1), 28.6 parts by mass of component (B-1), 18.0 parts by mass of component (C-1), 1.50 parts by mass of component (E-1), 0.20 parts by mass of component (E-3), and 2.60 parts by mass of component (F-1) were weighed into a 300 mL plastic container, and mixed for 1 minute at 2000 rpm using a THINKY Planetary Vacuum Mixer. Next, 10.0 parts by mass of component (D-1) and 15.1 parts by mass of component (X-1) were added and mixed at 2000 rpm for 1 minute. The remaining steps were the same as in Example 1 to prepare a thermally conductive silicone composition.

### [Example 3]

16.8 parts by mass of component (A-1), 18.0 parts by mass of component (B-1), 18.0 parts by mass of component (C-1), 1.50 parts by mass of component (E-1), 0.20 parts by mass of component (E-3), and 2.81 parts by mass of component (F-1) were weighed into a 300 mL plastic container, and mixed for 1 minute at 2000 rpm using a THINKY Planetary Vacuum Mixer. Next, 11.4 parts by mass of component (D-1) and 31.29 parts by mass of component (X-1) were added and mixed at 2000 rpm for 1 minute. The remaining steps were the same as in Example 1 to prepare a thermally conductive silicone composition.

### [Example 4]

24.18 parts by mass of component (A-1), 23.0 parts by mass of component (B-1), 18.0 parts by mass of component (C-1), 1.50 parts by mass of component (E-1), 0.20 parts by mass of component (E-3), and 2.62 parts by mass of component (F-1) were weighed into a 300 mL plastic container, and mixed for 1 minute at 2000 rpm using a THINKY Planetary Vacuum Mixer. Next, 4.50 parts by mass of component (D-1) and 26.0 parts by mass of component (X-1) were added and mixed at 2000 rpm for 1 minute. The remaining steps were the same as in Example 1 to prepare a thermally conductive silicone composition.

### [Comparative Example 1]

17.45 parts by mass of component (A-1), 25.5 parts by mass of component (Non-B-1), 18.0 parts by mass of component (C-1), 1.59 parts by mass of component (E-1), 0.21 parts by mass of component (E-3), and 2.90 parts by mass of component (F-1) were weighed into a 300 mL plastic container, and mixed for 1 minute at 2000 rpm using a THINKY Planetary Vacuum Mixer. Next, 12.6 parts by mass of component (D-1) and 21.8 parts by mass of component (X-1) were added and mixed at 2000 rpm for 1 minute. The remaining steps were the same as in Example 1 to prepare a thermally conductive silicone composition.

### [Comparative Example 2]

A thermally conductive silicone composition was prepared in the same manner as in Comparative Example 1, except that 25.5 parts by mass of component (Non-B-1) was replaced with 25.5 parts by mass of component (Non-B-2).

Table 1 shows the composition, as well as the thermal conductivity and extrusion amount of the thermally conductive silicone compositions obtained for Examples 1 to 4 and Comparative Examples 1 and 2.

**[Table 1]**

| Component | Example 1 | Example 2 | Example 3 | Example 4 | Comparative Example 1 | Comparative Example 2 |
|---|---|---|---|---|---|---|
| A-1 | 16.50 | 24.00 | 16.80 | 24.18 | 17.45 | 17.45 |
| B-1 | 29.50 | 28.60 | 18.00 | 23.00 | | |
| Non-B-1 | | | | | 25.5 | |
| Non-B-2 | | | | | | 25.5 |
| C-1 | 18.00 | 18.00 | 18.00 | 18.00 | 18.00 | 18.00 |
| D-1 | 10.80 | 10.00 | 11.40 | 4.50 | 12.60 | 12.60 |
| X-1 | 20.77 | 15.10 | 31.29 | 26.00 | 21.80 | 21.80 |
| E-1 | 1.50 | 1.50 | 1.50 | 1.50 | 1.59 | 1.59 |
| E-3 | 0.20 | 0.20 | 0.20 | 0.20 | 0.21 | 0.21 |
| F-1 | 2.73 | 2.60 | 2.81 | 2.62 | 2.90 | 2.90 |
| Amount of thermally conductive filler (vol.%) | 85.0 | 85.0 | 85.0 | 85.0 | 85.1 | 85.1 |
| Amount of Component (C) (vol.%) | 18.7 | 19.3 | 18.4 | 19.2 | 17.7 | 17.7 |
| Amount of component (D) (vol.%) | 11.2 | 10.7 | 11.7 | 4.8 | 12.4 | 12.4 |
| Thermal conductivity (W/m·K) | 11.7 | 10.7 | 11.8 | 11.3 | 11.1 | Unmeasurable |
| | | | | | | Paste |
| Extrusion rate (g/min) | 79 | 57 | 79 | 58 | 26 | Not formed |

### [Example 5]

14.5 parts by mass of component (A-2), 20.0 parts by mass of component (B-1), 18.0 parts by mass of component (C-1), 1.50 parts by mass of component (E-1), 0.20 parts by mass of component (E-3), and 4.0 parts by mass of component (F-2) were weighed into a 300 mL plastic container, and mixed for 1 minute at 2000 rpm using a THINKY Planetary Vacuum Mixer. Next, 7.0 parts by mass of component (D-1) and 34.8 parts by mass of component (X-1) were added and mixed at 2000 rpm for 1 minute. After scraping off the components on the wall of the plastic container with a spatula, the mixture was mixed at 2000 rpm for 1 minute. After cooling to room temperature, the mixture was degassed under vacuum for 3 minutes to prepare a thermally conductive silicone composition.

### [Example 6]

A thermally conductive silicone composition was prepared in the same manner as in Example 5, except that the 18.0 parts by mass of component (C-1) in Example 5 was changed to 5.0 parts by mass, the 7.0 parts by mass of component (D-1) was changed to 30.0 parts by mass, and the 34.8 parts by mass of component (X-1) was changed to 24.8 parts by mass.

### [Comparative Example 3]

A thermally conductive silicone composition was prepared in the same manner as in Example 5, except that the 18.0 parts by mass of component (C-1) of Example 5 was changed to 3.0 parts by mass, the 7.0 parts by mass of component (D-1) was changed to 32.0 parts by mass, and the 34.8 parts by mass of component (X-1) was changed to 24.8 parts by mass.

### [Comparative Example 4]

A thermally conductive silicone composition was prepared in the same manner as in Example 5, except that the 18.0 parts by mass of component (C-1) and 7.0 parts by mass of component (D-1) in Example 5 were replaced with 25.0 parts by mass of component (D-1).

### [Comparative Example 5]

A thermally conductive silicone composition was prepared in the same manner as in Example 5, except that the 18.0 parts by mass of component (C-1) in Example 5 was replaced with 18.0 parts by mass of component (B-3).

Table 2 shows the composition, as well as the thermal conductivity and extrusion amount of the thermally conductive silicone compositions obtained for Examples 5 and 6 and Comparative Examples 3 to 5.

**[Table 2]**

| Component | Example 5 | Example 6 | Comparative Example 3 | Comparative Example 4 | Comparative Example 5 |
|---|---|---|---|---|---|
| A-2 | 14.5 | 14.5 | 14.5 | 14.5 | 14.5 |
| B-1 | 20.0 | 20.0 | 20.0 | 20.0 | 20.0 |
| B-3 | | | | | 18.0 |
| C-1 | 18.0 | 5.0 | 3.0 | | |
| D-1 | 7.0 | 30.0 | 32.0 | 25.0 | 7.0 |
| X-1 | 34.8 | 24.8 | 24.8 | 34.8 | 34.8 |
| E-1 | 1.50 | 1.50 | 1.50 | 1.50 | 1.50 |
| E-3 | 0.20 | 0.20 | 0.20 | 0.20 | 0.20 |
| F-2 | 4.00 | 4.00 | 4.00 | 4.00 | 4.00 |
| Amount of thermally conductive filler (vol.%) | 82.2 | 82.3 | 82.3 | 82.2 | 82.2 |
| Amount of Component (C) (vol.%) | 17.3 | 4.8 | 2.9 | 0.0 | 0.0 |
| Amount of component (D) (vol.%) | 6.7 | 28.6 | 30.5 | 24.0 | 6.7 |
| Thermal conductivity (W/m·K) | 9.6 | 9.8 | 8.9 | 7.6 | 8.7 |
| Extrusion rate (g/min) | 67 | 69 | 59 | 24 | 71 |

### [Example 7]

14.3 parts by mass of component (A-2), 20.0 parts by mass of component (B-1), 1.20 parts by mass of component (E-1), 0.20 parts by mass of component (E-3), 3.10 parts by mass of component (F-2), 0.850 parts by mass of component (G-1), and 0.15 parts by mass of component (K-1) were weighed into a 1000 mL plastic container and mixed for 2 minutes at 1500 rpm using a KURABO MAZERUSTAR. Next, 7.0 parts by mass of component (B-2), 18.0 parts by mass of component (C-1), 35.0 parts by mass of component (X-2), and 0.10 parts by mass of calcium stearate (J-1) were added and mixed at 1500 rpm for 2 minutes. This was transferred to a T.K. HIVIS MIX (model number) manufactured by Tokushu Kika Kogyo Co., Ltd., and then heated and mixed at 160°C under reduced pressure for 60 minutes, and then cooled to room temperature to obtain a mixture.

0.020 parts by mass of component (G-2) and 0.0015 parts by mass of component (Y-1) were mixed uniformly into this mixture. Thereafter, 0.075 parts by mass of component (H-1) was added and mixed uniformly to prepare a thermally conductive silicone composition.

### [Comparative Example 6]

A thermally conductive silicone composition was prepared in the same manner as in Example 7, except that the 20.0 parts by mass of component (B-1) and the 18.0 parts by mass of component (C-1) in Example 7 were replaced with 25.0 parts by mass of component (C-1).

Table 3 shows the composition, as well as the thermal conductivity, extrusion amount, and hardness of the thermally conductive silicone compositions obtained for Example 7 and Comparative Example 6.

**[Table 3]**

| | Example 7 | Comparative Example 6 |
|---|---|---|
| A-2 | 14.3 | 14.3 |
| B-1 | 20.0 | 20.0 |
| B-2 | 7.0 | |
| C-1 | 18.0 | 25.0 |
| X-2 | 35.0 | 35.0 |
| E-1 | 1.20 | 1.20 |
| E-3 | 0.20 | 0.20 |
| F-2 | 3.10 | 3.10 |
| G-1 | 0.850 | 0.850 |
| G-2 | 0.020 | 0.020 |
| H-1 | 0.075 | 0.075 |
| Y-1 | 0.0015 | 0.0015 |
| K-1 | 0.15 | 0.15 |
| (J-1) Calcium stearate | 0.10 | 0.10 |
| Molar ratio of SiH/alkenyl group | 0.57 | 0.57 |
| Amount of thermally conductive filler (vol.%) | 82.2 | 82.2 |
| Amount of Component (C) (vol.%) | 17.3 | 24.0 |
| Amount of component (D) (vol.%) | 0.0 | 0.0 |
| Thermal conductivity (W/m·K) | 9.1 | 8.2 |
| Extrusion rate (g/min) | 40 | 33 |
| Type E hardness | 48 | 47 |

### [Example 8]

16.5 parts by mass of component (A-1), 29.5 parts by mass of component (B-1), 1.50 parts by mass of component (E-1), 0.20 parts by mass of component (E-3), 1.68 parts by mass of component (F-3), 0.60 parts by mass of component (G-1), and 0.13 parts by mass of component (K-1) were weighed into a 1000 mL plastic container and mixed for 2 minutes at 1500 rpm using a KURABO MAZERUSTAR. Next, 18.0 parts by mass of component (B-3), 10.8 parts by mass of component (C-2), 20.7 parts by mass of component (X-1), and 0.10 parts by mass of calcium stearate (J-1) were added and mixed at 1500 rpm for 2 minutes. This was transferred to a T.K. HIVIS MIX (model number) manufactured by Tokushu Kika Kogyo Co., Ltd., and then heated and mixed at 160°C under reduced pressure for 60 minutes, and then cooled to room temperature to obtain a mixture.

0.10 parts by mass of component (G-3), 0.149 parts by mass of component (G-4), and 0.0015 parts by mass of component (Y-1) were mixed uniformly into this mixture. Thereafter, 0.050 parts by mass of component (H-1) was added and mixed uniformly to prepare a thermally conductive silicone composition.

### [Example 9]

A thermally conductive silicone composition was prepared in the same manner as in Example 8, except that the 18.0 parts by mass of component (B-3) in Example 8 was replaced with 18.0 parts by mass of component (C-1), and the 10.8 parts by mass of component (C-2) was replaced with 10.8 parts by mass of component (D-1).

### [Example 10]

16.5 parts by mass of component (A-1), 24.0 parts by mass of component (B-1), 5.5 parts by mass of component (B-2), 1.45 parts by mass of component (E-1), 0.050 parts by mass of component (E-2), 0.20 parts by mass of component (E-3), 1.78 parts by mass of component (F-3), 0.66 parts by mass of component (G-1), and 0.14 parts by mass of component (K-1) were weighed into a 1000 mL plastic container and mixed for 2 minutes at 1500 rpm using a KURABO MAZERUSTAR. Next, 18.0 parts by mass of component (C-1), 20.8 parts by mass of component (D-1), 10.8 parts by mass of component (X-1), and 0.10 parts by mass of calcium stearate (J-1) were added and mixed at 1500 rpm for 2 minutes. This was transferred to a T.K. HIVIS MIX (model number) manufactured by Tokushu Kika Kogyo Co., Ltd., and then heated and mixed at 160°C under reduced pressure for 60 minutes, and then cooled to room temperature to obtain a mixture. 0.025 parts by mass of component (G-2) and 0.0015 parts by mass of component (Y-1) were mixed uniformly into this mixture. Thereafter, 0.050 parts by mass of component (H-1) was added and mixed uniformly to prepare a thermally conductive silicone composition.

### [Example 11]

16.5 parts by mass of component (A-1), 29.5 parts by mass of component (B-1), 1.45 parts by mass of component (E-1), 0.050 parts by mass of component (E-2), 0.20 parts by mass of component (E-3), 1.76 parts by mass of component (F-3), 0.65 parts by mass of component (G-1), and 0.14 parts by mass of component (K-1) were weighed into a 1000 mL plastic container and mixed for 2 minutes at 1500 rpm using a KURABO MAZERUSTAR. Next, 18.0 parts by mass of component (C-1), 10.8 parts by mass of component (D-1), 20.8 parts by mass of component (X-1), and 0.10 parts by mass of calcium stearate (J-1) were added and mixed at 1500 rpm for 2 minutes. This was transferred to a T.K. HIVIS MIX (model number) manufactured by Tokushu Kika Kogyo Co., Ltd., and then heated and mixed at 160°C under reduced pressure for 60 minutes, and then cooled to room temperature to obtain a mixture.

0.025 parts by mass of component (G-2) and 0.0015 parts by mass of component (J-1) were mixed uniformly into this mixture. Thereafter, 0.060 parts by mass of component (H-1) was added and mixed uniformly to prepare a thermally conductive silicone composition.

### [Comparative Example 7]

A thermally conductive silicone composition was prepared in the same manner as in Example 8, except that the 18.0 parts by mass of component (C-1) in Example 11 was changed to 21.0 parts by mass.

Table 4 shows the composition, as well as the thermal conductivity, extrusion amount, and hardness of the thermally conductive silicone compositions obtained for Example 8 to 11 and Comparative Example 7.

**[Table 4]**

| | Example 8 | Example 9 | Example 10 | Example 11 | Comparative Example 7 |
|---|---|---|---|---|---|
| A-1 | 16.5 | 16.5 | 16.5 | 16.5 | 16.5 |
| B-1 | 29.5 | 29.5 | 24.0 | 29.5 | 29.5 |
| B-2 | | | 5.5 | | |
| B-3 | 18.0 | | | | |
| C-1 | | 18.0 | 18.0 | 18.0 | 21.0 |
| C-2 | 10.8 | | | | |
| D-1 | | 10.8 | 20.8 | 10.8 | 10.8 |
| X-1 | 20.7 | 20.7 | 10.8 | 20.8 | 20.8 |
| E-1 | 1.50 | 1.50 | 1.45 | 1.45 | 1.45 |
| E-2 | | | 0.05 | 0.05 | 0.05 |
| E-3 | 0.20 | 0.20 | 0.20 | 0.20 | 0.20 |
| F-3 | 1.68 | 1.68 | 1.78 | 1.76 | 1.76 |
| G-1 | 0.600 | 0.600 | 0.660 | 0.650 | 0.650 |
| G-2 | | | 0.025 | 0.025 | 0.025 |
| G-3 | 0.100 | 0.100 | | | |
| G-4 | 0.149 | 0.149 | | | |
| H-1 | 0.050 | 0.050 | 0.050 | 0.060 | 0.060 |
| Y-1 | 0.0015 | 0.0015 | 0.0015 | 0.0015 | 0.0015 |
| K-1 | 0.13 | 0.13 | 0.14 | 0.14 | 0.14 |
| (J-1) Calcium stearate | 0.10 | 0.10 | 0.10 | 0.10 | 0.10 |
| Molar ratio of SiH/alkenyl group | 1.03 | 1.03 | 0.55 | 0.55 | 0.55 |
| Amount of thermally conductive filler (vol.%) | 84.8 | 84.8 | 85.3 | 85.1 | 85.5 |
| Amount of Component (C) (vol.%) | 11.2 | 18.7 | 18.4 | 18.7 | 21.2 |
| Amount of component (D) (vol.%) | 0.0 | 11.2 | 21.3 | 11.2 | 10.9 |
| Thermal conductivity (W/m·K) | 11.5 | 11.2 | 13.5 | 12.6 | 12.6 |
| Extrusion rate (g/min) | 46 | 65 | 36 | 31 | 33 |
| Type E hardness | 26 | 33 | 48 | 52 | 62 |

### [Example 12]

12.5 parts by mass of component (A-3), 25.2 parts by mass of component (B-1), 22.8 parts by mass of component (B-2), 20.25 parts by mass of component (C-3), 15.4 parts by mass of component (D-1), 0.20 parts by mass of component (E-3), 1.00 parts by mass of component (E-4), 1.81 parts by mass of component (F-3), 0.55 parts by mass of component (G-1), 0.125 parts by mass of component (G-3), and 0.05 parts by mass of component (J-1): calcium stearate were weighed into a 300 mL plastic container, and mixed for 2 minutes at 2000 rpm using a THINKY Planetary Vacuum Mixer. Next, 0.064 parts by mass of component (K-1) and 0.001 parts by mass of component (Y-2) were added and mixed at 2000 rpm for 1 minute. After scraping off the components on the wall of the plastic container with a spatula, the mixture was mixed at 2000 rpm for 1 minute, and then cooled to room temperature to obtain a mixture. 0.05 parts by mass of component (H-1) was added to the mixture and mixed uniformly to prepare a thermally conductive silicone composition.

### [Example 13]

14.28 parts by mass of component (A-1), 28.0 parts by mass of component (B-1), 0.20 parts by mass of component (E-3), 1.00 parts by mass of component (E-4), 2.30 parts by mass of component (F-3), 0.795 parts by mass of component (G-1), 0.125 parts by mass of component (G-3), and 0.10 parts by mass of component (J-1): calcium stearate were weighed into a T.K. HIVIS MIX (model number) manufactured by Tokushu Kika Kogyo Co., Ltd. and mixed at 12 rpm for 10 minutes. Next, 19.0 parts by mass of component (B-2), 18.5 parts by mass of component (C-2), and 15.5 parts by mass of component (X-1) were weighed and mixed at 12 rpm for 10 minutes. Thereafter, the mixture was heated and mixed at 160°C under reduced pressure for 60 minutes, and then cooled to room temperature to obtain a mixture. 0.149 parts by mass of component (K-1) and 0.001 parts by mass of component (Y-2) were then uniformly mixed into this mixture to prepare a thermally conductive silicone composition. Thereafter, 0.050 parts by mass of component (H-1) was added and mixed uniformly to prepare a thermally conductive silicone composition.

### [Example 13C1, C2, C3]

Examples 13C1, 13C2, and 13C3 were prepared by blending the amounts of Carbon Black-1, Carbon Black-2, and Carbon Black-3 (K-2-1 to K-2-3) shown in Table 5 into the thermally conductive silicone composition of Example 13.

Table 5 shows the composition, as well as the hardness, thermal conductivity, extrusion amount, and heat resistance at 180°C of the thermally conductive silicone compositions of Examples 12, 13, and 13C1 to 13C3. Note that in the table, values common to Example 13 and 13C1 to 13C3 are indicated by "←".

### [Heat resistance evaluation at 180°C]

In order to confirm the hardness due to the addition of carbon black-1 to carbon black-3, which are heat resistance imparting agents, the case where no addition (Example 13) was used as a standard (good: ○) and suppression of changes in hardness and thermal conductivity of Examples 13C1 to 13C3 after heat aging at 180°C was evaluated (particularly good: ⊚). The results are shown in Table 5.

**[Table 5]**

| | Example 12 | Example 13 | Example 13C1 | Example 13C2 | Example 13C3 |
|---|---|---|---|---|---|
| A-1 | - | 14.28 | ← | ← | ← |
| A-3 | 12.5 | - | - | - | - |
| B-1 | 25.2 | 28.0 | ← | ← | ← |
| B-2 | 22.8 | 19.0 | ← | ← | ← |
| C-3 | 20.25 | - | - | - | - |
| C-2 | | 18.5 | ← | ← | ← |
| D-1 | 15.4 | - | - | - | - |
| X-1 | | 15.5 | ← | ← | ← |
| E-3 | 0.20 | 0.20 | ← | ← | ← |
| E-4 | 1.00 | 1.00 | ← | ← | ← |
| F-3 | 1.81 | 2.30 | ← | ← | ← |
| G-1 | 0.55 | 0.795 | ← | ← | ← |
| G-3 | 0.125 | 0.125 | ← | ← | ← |
| H-1 | 0.050 | 0.050 | ← | ← | ← |
| Y-2 | 0.001 | 0.001 | ← | ← | ← |
| K-1 | 0.064 | 0.149 | ← | ← | ← |
| (J-1) Calcium stearate | 0.05 | 0.1 | ← | ← | ← |
| K-2-1: Carbon black-1 | - | - | 1.00 | - | - |
| K-2-2: Carbon black-2 | - | - | - | 0.50 | - |
| K-2-3: Carbon black-3 | - | - | - | - | 0.50 |
| Molar ratio of SiH/alkenyl group | 0.54 | 0.57 | ← | ← | ← |
| Amount of thermally conductive filler (vol.%) | 87.4 | 84.4 | ← | ← | ← |
| Amount of Component (C) (vol.%) | 19.9 | 18.8 | ← | ← | ← |
| Amount of component (D) (vol.%) | 15.1 | 0.0 | ← | ← | ← |
| Thermal conductivity (W/m·K) | 15.5 | 11.7 | ← | ← | ← |
| Extrusion rate (g/min) | 30 | 45 | ← | ← | ← |
| Type E hardness | 40 | 46 | ← | ← | ← |
| Heat resistance at 180°C | - | ○ | ⊚ | ⊚ | ⊚ |

### [Summary]

As shown in Table 1, Examples 1 to 4, which contained the components of the present invention in amounts within the specified ranges, exhibited thermal conductivity exceeding 11 W/m·K, and an extrusion rate exceeding 50 g/min, thus demonstrating good workability.

On the other hand, in Comparative Example 1, which did not contain component (B), the thermal conductivity exceeded 9 W/m·K, but the extrusion rate was only 26 g/min, which does not surpass 30 g/min which is the level indicating sufficient extrusion workability. Furthermore, the composition of Comparative Example 2, which does not contain component (B), did not form a paste, and the thermal conductivity could not be measured.

As shown in Table 2, Examples 5 and 6, which contained the components of the present invention in amounts within the specified ranges, exhibited thermal conductivity exceeding 9 W/m·K, and an extrusion rate exceeding 60 g/min, thus demonstrating good workability.

Comparative Example 3, which contained 30 vol.% or more of component (D), outside the specified range, had a thermal conductivity of 8.9 W/m·K, thus not exceeding 9 W/m·K. Similarly, Comparative Examples 4 and 5, which were outside the specified range and did not contain component (C), had thermal conductivity of 7.6 W/m·K and 8.7 W/m·K, respectively.

As shown in Table 3, Example 7, which contains each component of the present invention within the specified range, had a thermal conductivity of 9.1 W/m·K and an extrusion rate of 40 g/min, thus demonstrating good workability. Comparative Example 6, which contained 20 vol.% or more of component (C), outside the specified range, had a thermal conductivity of 8.2 W/m·K, which does not exceed 9 W/m·K.

As shown in Table 4, Examples 8 to 11, which contained the components of the present invention in amounts within the specified ranges, exhibited thermal conductivity exceeding 11 W/m·K, and an extrusion rate exceeding 30 g/min, thus demonstrating good workability. After curing, the type E hardness was 60 or less in all cases.

Comparative Example 7, which contained 20 vol.% or more of component (C), outside the specified range, had a Type E hardness of 62 after curing, which is greater than 60, and thus the stress relaxation properties and flexibility were impaired.

As shown in Table 5, Examples 12 and 13, which contained the components of the present invention within the specified ranges, exhibited thermal conductivity exceeding 11 W/m·K. In particular, by using component (E4) having a specific degree of siloxane polymerization in combination, the extrusion rate exceeded 30 g/min, thus demonstrating favorable workability. Furthermore, the type E hardness after curing was 60 or less. Furthermore, it was confirmed that adding carbon black to Example 13 (Examples 13C1 to 13C3) could improve the heat resistance at 180°C after curing as compared to Example 13.

### [Summary]

The results of Examples 1 to 13 show that a thermally conductive silicone composition containing the components of the present invention within the specified range had a high thermal conductivity of at least 9 W/m·K and extrusion rates in excess of 30 g/min. Therefore, it is expected that the workability is favorable and sufficient heat dissipation characteristics can be achieved. Furthermore, if the present composition is designed to be curable reactive, the cured product will have a Type E hardness of 60 or less, and thus stress relaxation properties and flexibility are not impaired.

On the other hand, Comparative Examples 1 to 7 show that when the added amounts of component (C) and component (D) are outside the scope of the claims of the present invention, the compositions of these comparative examples will have a low thermal conductivity of 9 W/m·K or less and an extrusion rate of less than 30 g/min, which raises concerns that these compositions may be difficult to work with or may not achieve sufficient heat dissipation properties. Furthermore, if the curable reactive composition of the comparative examples was cured, the Type E hardness of the resulting cured product was 60 or more, which means that the stress relaxation properties and flexibility were impaired.

## Claims

1. A thermally conductive composition, comprising:
(A) at least one thermally conductive filler selected from zinc oxide powder and aluminum oxide powder, having an average particle size in a range of 0.1 to 1.0 µm;
(B) at least one thermally conductive filler selected from aluminum nitride powder and aluminum oxide powder, which has an average particle size in a range of 2.0 to 29 µm and is selected from amorphous, rounded, and polyhedral shapes;
(C) aluminum nitride powder having an average particle size of 30 µm or more and having a shape selected from irregular, rounded, and polyhedral shapes;
(D) aluminum nitride powder having an average particle size of more than 50 µm and a spherical shape;
(E) one or more components selected from the following Component (E1) to Component (E3):
(E1) an organopolysiloxane expressed by general formula (1): 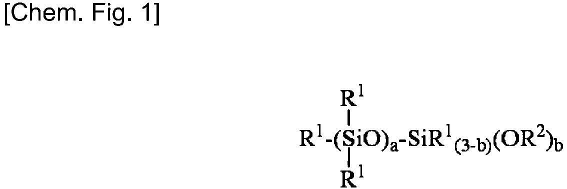
(In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is an integer from 5 to 250, and b is an integer from 1 to 3)
and having a viscosity at 25°C of 10 to less than 10,000 mPa·s;
(E2) a siloxane compound having an alkenyl group and a hydrolyzable silyl group at the molecular chain terminal, expressed by general formula (2):
R^{alk}R³₂SiO(R³₂SiO)_{c}R³₂Si-R⁴-SiR³_{(3-d)}(OR⁵)_{d}
(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3)
having a viscosity at 25°C in a range of 10 to 10,000 mPa·s; and
(E3) one or more type of alkoxysilane having an alkyl group with 6 or more carbon atoms in a molecule, or a hydrolysis condensate thereof; and
(F) one or more type of matrix polymer having a viscosity at 25°C in a range of 10 to 1,000,000 mPa·s;
wherein
the amount of components (A) to (D) is in a range of 60 to 90 vol.% based on the total solid content of the composition,
the amount of component (C) is in a range of 1.0 to 20.0 vol.% based on the total solid content of the composition, and
the amount of component (D) is in a range of 0.0 to 30.0 vol.% based on the total solid content of the composition.

2. The thermally conductive composition according to claim 1, wherein the thermally conductive filler containing Components (A) to (D) is surface-treated with at least a portion of Component (E).

3. The thermally conductive composition according to claim 1, wherein the thermally conductive filler containing Components (A) to (D) is substantially free of aluminum nitride powder having an average particle size of less than 2.0 µm.

4. A thermally conductive composition according to claim 1, wherein the amount of aluminum nitride powder selected from amorphous, rounded, and polyhedral shapes selected from component (B) and component (C) is 50 vol.% or less based on the total solid content of the composition.

5. The thermally conductive composition according to claim 1, wherein the total amount of the thermally conductive filler which is aluminum nitride powder is 60 vol.% or less based on the total solid content of the composition.

6. The thermally conductive composition according to claim 1, wherein component (F) is (F0) one or more organopolysiloxanes having a viscosity at 25°C in a range of 10 to 1,000,000 mPa·s.

7. The thermally conductive composition according to claim 1, wherein Component (F) is one or more organopolysiloxane selected from (F1) organopolysiloxanes not having a curing reactive group with a carbon-carbon double bond in the molecule, and (F2) organopolysiloxanes having a curing reactive group with a carbon-carbon double bond in the molecule.

8. The thermally conductive composition according to claim 1, wherein component (F) contains at least:
(F2) an organopolysiloxane having a curing reactive group with a carbon-carbon double bond in the molecule;
(G) an organohydrogenpolysiloxane in an amount such that the amount of silicon-bonded hydrogen atoms in component (G) is 0.2 to 5 moles per mole of curing reactive groups with a carbon-carbon double bond contained in component (F); and
(H) a catalytic amount of a hydrosilylation reaction catalyst.

9. The thermally conductive composition according to claim 1, comprising:
(K) a heat resistance imparting agent.

10. The thermally conductive composition according to claim 9, wherein component (K) is a heat resistance imparting agent containing at least a component selected from (K1) a phthalocyanine compound, and (K2) carbon black.

11. The thermally conductive composition according to claim 1, further comprising:
(J) at least one type selected from the group consisting of fatty acids, fatty acid esters, and fatty acid metal salts.

12. The thermally conductive composition according to claim 11, wherein Component (J) is (J1) one or more compound selected from stearic acid, alkali metal salts of stearic acid, and alkaline earth metal salts of stearic acid.

13. The thermally conductive composition according to claim 1, wherein Component (E) includes Component (E1), and in general formula (1), a is a number in a range of 40 to 90, and b is 3.

14. The thermally conductive composition according to any one of claims 1 to 13, wherein the composition or a cured reaction product thereof has a thermal conductivity of 9.0 W/mK or more.

15. A thermally conductive member, comprising: the thermally conductive composition according to any one of claims 1 to 13, or a cured product thereof.

16. A heat dissipating structure, comprising the thermally conductive member according to claim 15.

17. A heat dissipation structure, wherein a heat dissipation member is provided on a heat dissipation component or a circuit board on which the heat dissipation component is mounted, with the thermally conductive composition or a cured product thereof according to any one of claims 1 to 13 interposed therebetween.

18. The heat dissipating structure according to claim 16 or claim 17, which is an electrical or electronic device.

19. The heat dissipating structure according to claim 16 or claim 17, which is an electrical or electronic component or a secondary battery.

20. A method for producing a thermally conductive composition according to any one of claims 1 to 13, comprising: a step of mixing Components (A) to (D), Component (E), and Component (F), and then heating and mixing the mixture; and a step of subsequently mixing other components.

21. A method of manufacturing a heat dissipating structure, comprising:
a step of applying the thermally conductive composition according to any one of claims 1 to 13 to a heat dissipating component or a circuit board on which the heat dissipating component is mounted, and then curing at a temperature less than 130°C.
